# EUROPEAN PATENT SPECIFICATION

(11) **EP 4 347 710 B1**
(45) Date of publication and mention of the grant of the patent: **13.05.2026**
(21) Application number: 22729214.1
(22) Date of filing: 17.05.2022
(51) Int. Cl.: C08L 33/10, C08G 18/42, C08G 18/34, C08G 18/32, C08G 18/75, C08G 18/08, C09D 175/06, C08L 75/06

(54) **MIXER SYSTEM FOR PRODUCING AQUEOUS COATING MATERIALS**
MISCHSYSTEM ZUR HERSTELLUNG WÄSSRIGER BESCHICHTUNGSSTOFFE
SYSTÈME MÉLANGEUR POUR LA PRODUCTION DE MATÉRIAUX DE REVÊTEMENT AQUEUX

(30) Priority: 28.05.2021 EP 21176463
(43) Date of publication of application: 10.04.2024
(73) Proprietor: BASF Coatings GmbH, 48165 Münster (DE)
(72) Inventor: LUECKERT, Jens, 48165 Münster (DE); FOELLING, Frederik, 48165 Münster (DE); MACHACZEK, Peter, 48165 Münster (DE); DIEPENBROCK, Vera, 48165 Münster (DE); HOEVELMANN, Claas Henrik, 48165 Münster (DE); SCHNIEDERS, Britta, 48165 Münster (DE); WINSBERG, Jan, 48165 Münster (DE); GLOMB, Melanie, 48165 Münster (DE); FOCKE, Thomas, 48165 Münster (DE)
(74) Representative: Coatings IP Association
(86) International application number: PCT/EP2022/063258
(87) International publication number: WO 2022/248282

(56) References cited:
- WO-A1-2021/018594

## Description

The present invention relates to a mixer system for producing aqueous coating materials from at least one aqueous pigment paste A, comprising at least one color pigment, and at least one mixing clear resin component B, comprising at least one aqueous dispersion (wD), wherein the dispersion (wD) comprises an acrylic-based multi-stage emulsion polymer which is prepared by use of at least one silane-containing olefinically unsaturated monomer. The present invention further relates to a method for producing a beforementioned aqueous coating material in which the individual components A and B are mixed to give the aqueous coating material. The present invention also relates to a process of producing a coating layer on a substrate comprising the application of a beforementioned aqueous coating material to a substrate and subsequent low-bake curing of the applied coating material. The present invention lastly relates to the use of a mixer system of the invention for producing aqueous coating materials for refinishing and/or for the coating of automobile bodies and/or plastics parts.

### State of the art

Polyacrylate dispersions synthesized by emulsion polymerization show high potential in coating applications. Exemplary state of the art dispersions are two or multi-step emulsion polyacrylates with a core-shell or seed-core-shell (SCS) architecture. These acrylic-based multi-stage emulsion polymers are applied as resin/binder components in aqueous coating materials like aqueous basecoats. For example, WO 2017/088988 A1 and WO 2016/116299 A1 describe such acrylic-based multi-stage emulsion polymer and their respective use in aqueous basecoats in the field of automotive coating application. Addressed objectives are, for example, adhesion properties and aesthetic properties like avoidance of pinholes.

One major field of interest in automotive coating applications is the low-bake area, i.e. the possibility to cure the applied coating materials at comparably low temperatures without taking a loss in coating performance properties. While the low-bake property is an intrinsic requirement in refinish (i.e. repair) applications, it is also desirable in OEM (original equipment manufacturing) automotive applications for economic and environmental reasons.

WO 2021/018594 A1 discloses a mixing system for producing aqueous coating materials with low VOC (volatile organic content) for, in particular, automotive refinish applications. The mixing system comprises at least one aqueous pigment paste and at least one pigment-free component B. The mixing system may comprise, among others, an acrylic-based multi-stage emulsion polymer. The mixing system is suitable for refinishing and/or coating of automobile bodies and/or plastic parts. Also, the mixing system exhibits very good storage stability and high shade accuracy during repair coating, meaning that respective refinish process may be conducted with high accuracy and reproducibility.

Even if the above-described prior art coating materials and mixing systems already show quite notable performance profiles, it remains a challenge to improve mechanical properties, like in particular adhesion and interlayer adhesion properties, of respective coating layers and build-ups, especially in the low-bake area.

### Objective and problem

A problem addressed by the present invention, accordingly, was to provide a mixing system for producing aqueous pigment-containing coating materials for refinishing and/or coating of automobile bodies and/or plastic parts, whereby coating layers and build-ups produced by application of these coating materials should exhibit excellent adhesion and interlayer adhesion properties.

### Technical solution

The problems described above are solved by the subject-matter claimed in the claims and also by the preferred embodiments of that subject-matter that are described in the description hereinafter.

In particular, it was found that the problems could be solved by means of a mixer system for producing aqueous coating materials from at least one aqueous pigment paste A, comprising at least one color pigment, and at least one aqueous mixing clear resin component B, whereby the at least one mixing clear resin component B comprises at least one aqueous dispersion (wD) comprising an acrylic-based multi-stage emulsion polymer, whereby the acrylic-based multi-stage emulsion polymer is produced by successive radical emulsion polymerization of at least two mixtures (M) of olefinically unsaturated monomers, wherein the mixture (M) applied in the last step of emulsion polymerization comprises at least one silane-containing olefinically unsaturated monomer.

A further subject of the present invention is a method for producing a beforementioned aqueous coating material by mixing the at least two aqueous components A and B and optionally with at least one further component C.

The present invention relates, moreover, to the use of a mixer system of the invention for producing aqueous coating materials for refinishing and/or for coating of automobile bodies and/or plastics parts.

The present invention also relates to a process of producing a coating layer on a substrate comprising the application of a beforementioned aqueous coating material to a substrate and subsequent curing of the applied coating material.

By means of the subject-matter of the present invention, excellent adhesion and interlayer adhesion properties of coating layers are realizable also within the low-bake area. The coating layers may be produced both in the field of refinish and OEM applications. Both single layer and, in particular, multicoat layer systems may be produced.

Also, it is a benefit of the present invention that the mixer system and also the individual components of the mixing systems, in particular component A and B, may be produced with comparably low volatile organic content. If desired, not only the individual components of the mixer system of the invention but also the aqueous coating materials producible from the mixer system of the invention each have a VOC content of at most 250 g/L. To achieve such VOC contents, the components of the mixer system of the invention comprise predominantly water as their solvent, meaning that organic solvents are present only in small amounts. As well as economic advantages, this reduced solvent fraction leads to an improvement in workplace safety (fire protection) and to a reduction in the environmental burden associated with the drying of the coating films. In spite of the low VOC content, the individual components of the mixer system of the invention exhibit excellent storage stability.

### Detailed description

The mixer system of the invention comprises at least the components A and B. A component here means storage-stable, separately storable building blocks (mixing building blocks), from which, by mixing, a coating material is produced, whereby the production may optionally comprise addition of and mixing with at least one further component C and/or final adjustment like adjustment of pH or application viscosity. Through the mixing of the individual components, desired matchable colorations can be obtained. The components may be provided to the user in the form, for example, of a kit comprising at least the components A and B.

Different forms of each of the components A and B may be provided. In this way, series are formed, which may consist of one or more forms of the components A and B. With particular preference, 1 to 100 different forms of component A and 1 to 6 different forms of component B are provided. By this means, for example, a very broad refinish setup with the opportunity of realizing a broad range of colors and color shades, compatibilities with OEM multicoat layer systems and technological profiles and properties may be provided.

### Component A

Component A is an aqueous pigment paste comprising at least one color pigment (a-1) and also at least one binder resin, for example an anionically stabilized binder (a-2) and/or at least one nonionically stabilized binder (a-3). The pigment paste A preferably has a VOC content of less than or equal to 250 g/L.

The VOC value in this context and also throughout this invention is defined as follows: VOC (g/L) = (total weight of volatile constituents (g) - total weight of water (g)) / (volume of coating material (L) - volume of water (L)). Volatile constituents for the present purposes are compounds which at processing temperature, especially at 20°C, have a vapor pressure of more than 10 pascals (cf. BImSchV 31 also corresponding VOC Directives and VOC Regulations of the EU). Furthermore, volatile constituents are organic compounds which have a starting boiling point of less than or equal to 250°C under a standard pressure of 101.3 kPa (cf. Directive 2004/42/EC of the European Parliament and of the Council).

The expression "aqueous pigment paste" is known to the skilled person. It refers fundamentally to a pigment paste which is not based exclusively on organic solvents as dissolving and/or dispersing medium. Indeed, an organic solvent based pigment paste contains exclusively organic solvents and no water for dissolving and/or dispersing the components, or is a paste prepared not explicitly with addition of water, instead, water enters the paste only in the form of an impurity, atmospheric moisture, and/or as a solvent for any specific additives used. Such a paste - in contrast to an aqueous pigment paste - would be referred to as solvent-based or as "based on organic solvents". "Aqueous" in the context of the present invention is preferably to be understood to mean that the pigment paste in question has a water fraction of at least 20 wt%, preferably at least 25 wt%, very preferably at least 30 wt%, based in each case on the total amount of the solvents present (i.e., water and organic solvents). Preferably, in turn, the water fraction is 60 to 100 wt%, more particularly 70 to 98 wt%, very preferably 75 to 95 wt%, based in each case on the total amount of the solvents present.

The aqueous pigment paste comprises a binder resin. In relation to the term "binder" (or binder resin / binder polymer or similar expressions)), reference is made to Römpp-Lexikon Lacke und Druckfarben, Georg Thieme Verlag, Stuttgart, New York, 1998, pages 73 and 74, "Bindemittel". The binder or binder resin, quite obviously and as commonly known by the person skilled in the art, stabilize and disperse the pigments within the aqueous pigment paste, meaning that the binder resin typically has the effect of an emulsifier for the pigments. Also, the binder resin of a pigment paste typically contributes to realizing a stable dispersion during production of the paste, whereby this production typically involves grinding.

To increase the dispersibility of the binder resin as such in an aqueous medium, it preferably contains respective functional groups known to cause the water dispersibility. Preferred are binders (a-2) comprising certain groups which can be converted by neutralizing agents in anionic groups (potentially anionic groups), and binders (a-3) containing certain nonionic groups. These binders are referred to in the context of the present invention as anionically stabilized binders (a-2) and, respectively, nonionically stabilized binders (a-3). The anionic groups which can be converted into anionic groups by neutralizing agents are, for example, carboxylic, sulfonic and/or phosphonic acid groups, especially carboxylic acid groups. Groups for the nonionic stabilization are preferably poly(oxyalkylene) groups, more particularly poly(oxyethylene) and/or poly(oxypropylene) groups.

### Color pigment (a-1):

A skilled person is familiar with the concept of color pigments. The term "color pigment", in the sense of the present invention is interchangeable with "coloring pigment" or "color-imparting pigment". A corresponding definition of the pigments and further specifications thereof are handled in DIN 55943 (Date: October 2001).

The color pigment is preferably selected from the group of inorganic and/or organic color pigments and/or fillers.

Organic color pigments used with particular preference are selected from the group of (i) monoazopigments, such as C.I. Pigment Brown 25, C.I. Pigment Orange 5, 36 and 67, C.I. Pigment Orange 5, 36 and 67, C.I. Pigment Red 3, 48:2, 48:3, 48:4, 52:2, 63, 112 and 170, and C.I. Pigment Yellow 3, 74, 151 and 183; (ii) disazopigments, such as C.I. Pigment Red 144, 166:214 and 242 C.I. Pigment Red 144, 166:214 and 242, and also C.I. Pigment Yellow 83; (iii) anthraquinone pigments, such as C.I. Pigment Yellow 147 and 177, and also C.I. Pigment Violet 31; (iv) benzimidazole pigments, such as C.I. Pigment Orange 64; (v) quinacridone pigments, such as C.I. Pigment Orange 48 and 49, C.I. Pigment Red 122, 202 and 206, and C.I. Pigment Violet 19; (vi) quinophthalone pigments, such as C.I. Pigment Yellow 138; (vii) diketopyrrolopyrrole pigments, such as C.I. Pigment Orange 71 and 73, and C.I. Pigment Red 254, 255, 264 and 270; (viii) dioxazine pigments, such as C.I. Pigment Violet 23 and 37; (ix) indanthrone pigments, such as C.I. Pigment Blue 60; (x) isoindoline pigments, such as C.I. Pigment Yellow 139 and 185; (xi) isoindolinone pigments, such as C.I. Pigment Orange 61 and also C.I. Pigment Yellow 109 and 110; (xii) metal complex pigments, such as C.I. Pigment Yellow 153; (xiii) perinone pigments, such as C.I. Pigment Orange 43; (xiv) perylene pigments, such as C.I. Pigment Black 32, C.I. Pigment Red 149, 178 and 179 and C.I. Pigment Violet 29; (xv) phthalocyanine pigments, such as C.I. Pigment Violet 29, C.I. Pigment Blue 15, 15:1, 15:2, 15:3, 15:4, 15:6 and 16, and C.I. Pigment Green 7 and 36; (xvi) aniline black, such as C.I. Pigment Black 1; (xvii) azomethine pigments; and also (xviii) mixtures thereof.

Inorganic color pigments used with particular preference are selected from the group of (i) white pigments, such as titanium dioxide (C.I. Pigment White 6), zinc white, pigmentary zinc oxide, zinc sulfide, lithopone; (ii) black pigments, such as black iron oxide (C.I. Pigment Black 11), iron manganese black, spinell black (C.I. Pigment Black 27), carbon black (C.I. Pigment Black 7); (iii) chromatic pigments, such as ultramarine green, ultramarine blue, manganese blue, ultramarine violet, manganese violet, red iron oxide (C.I. Pigment Red 101), molybdate red (C.I. Pigment Red 104), ultramarine red, brown iron oxide, mixed brown, spinell phases and corundum phases (C.I. Pigment Brown 24, 29 and 31), yellow iron oxide (C.I. Pigment Yellow 42), bismuth vanadate (C.I. Pigment Yellow 184); and also (iv) mixtures thereof.

Examples of inorganic pigments typically used as fillers are transparent silicon dioxide, ground quartz, aluminum oxide, aluminum hydroxide, natural micas, natural and precipitated chalk and barium sulfate.

The color pigment (a-1) is used preferably in certain total amounts. More preferably the aqueous pigment paste A comprises the at least one color pigment (a-1) in a total amount of 0.08 to 50 wt%, preferably of 2.5 to 47 wt%, based on the total weight of the aqueous pigment paste A.

Besides the at least one color pigment (a-1), the aqueous pigment paste A may further comprise at least one effect pigment. Effect pigments are those pigments which produce a decorative effect in coating finishes and may additionally, but not exclusively, produce a coloring effect. The effect pigments are notable in particular for a platelet-like construction. Such effect pigments are known to those skilled in the art and are described, for example, in Römpp-Lexikon Lacke und Druckfarben, Georg Thieme Verlag, Stuttgart, New York, 1998, pages 176 and 451.

Preferred effect pigments are, for example, platelet-shaped metallic effect pigments such as platelet-shaped aluminum pigments, gold bronzes, oxidized bronzes and/or iron oxide-aluminum pigments, pearlescent pigments and/or metal oxide-mica pigments and/or other effect pigments such as platelet-shaped graphite, platelet-shaped iron oxide, multilayer effect pigments composed of PVD films and/or liquid crystal polymer pigments. Particularly preferred are platelet-shaped metallic effect pigments, especially platelet-shaped aluminum pigments and/or coated metal oxide-mica pigments.

A multiplicity of these effect pigments is available on the market, and differ in particle size, particle size distribution, and particle morphology. The pigments are selected according to the desired effect in the coating film. Within the present invention it is possible for the aqueous pigment pastes to contain only one effect pigment (a-1) or else a mixture of different effect pigments (a-1).

With preference in accordance with the invention, however, the aqueous pigments paste A contains 0 wt% of effect pigments, based on the total weight of the aqueous pigment paste A.

### Binder resins:

The aqueous pigment paste A generally may comprise any binder resin being suitable and generally known for such purposes, i.e. for the purposes of binder resins in pigment pastes, and it may be chosen according to individual needs and preferences. Preferably, the binder resin is at least one anionically stabilized binder (a-2) and/or at least one nonionically stabilized binder (a-3). These binders are preferably present in a certain total amount. The aqueous pigment paste preferably comprises the at least one anionically stabilized binder (a-2) and/or the at least one nonionically stabilized binder (a-3), more particularly a mixture of the anionically stabilized binder (a-2) described below and the nonionically stabilized binder (a-3) described below, in a total amount of 5 to 35 wt%, preferably of 7 to 30 wt%, more particularly of 9 to 25 wt%, based in each case on the total weight of the aqueous pigment paste A. If there is more than one anionically stabilized binder (a-2) and/or one nonionically stabilized binder (a-3) present, then these total amounts are based on the sum of the amount of all the anionically and nonionically stabilized binders used. The total amounts recited above permit a stable dispersion of the color pigment (a-1) and any further effect pigments, thus giving the aqueous pigment paste A high stability on storage. Moreover, these binders lead to high mechanical stability on the part of the aqueous coating materials produced from these pastes. These binders, furthermore, ensure high freeze-thaw stability on the part of the aqueous pigment paste A.

### Anionically stabilized binder (a-2):

With preference in accordance with the invention, certain anionically stabilized binders (a-2) are used. In order to achieve the above-described low VOC content of the aqueous pigment paste A, particular preference is given to using anionically stabilized binders dispersed in water.

In one preferred embodiment of the first subject of the invention, therefore, the anionically stabilized binder (a-2) of the pigment paste A is an anionically stabilized polyurethane polymer in dispersion in water, where the anionically stabilized polyurethane polymer has an acid number of 20 to 40 mg KOH/g, based on the solids content, where the dispersion has a pH of 7.0 to 8.0, and where the dispersion comprises a polyol, more particularly polypropylene glycol, having an average molar mass Mₙ of 500 to 1500 Da.

The anionically stabilized polyurethane polymers are obtainable by the action of a prepolymer containing isocyanate groups with compounds that are reactive toward isocyanate groups, as described for example in the laid-open specification DE 199 21 457 A1. This reaction of the components takes place in accordance with the well-known methods of organic chemistry (cf., e.g., Kunststoff-Handbuch, Volume 7: Polyurethane, edited by Dr. Y. Oertel, Carl Hanser Verlag, Munich, Vienna 1983).

The reaction of the components takes place preferably in the customary and known organic solvents. The amount of organic solvents in this case may vary within wide limits, and ought to be sufficient to form a prepolymer solution with suitable viscosity. Generally speaking, up to 70 wt%, preferably 5 to 50 wt%, and more preferably less than 20 wt% of solvents are used, based on the solids content. Accordingly, for example, the reaction may be carried out with very particular preference at a solvent content of 10-15 wt%, based on the solids content.

The reaction of the components may optionally take place in the presence of a catalyst, such as organotin compounds and/or tertiary amines.

Prepolymers containing isocyanate groups may be prepared by reaction of polyols having a hydroxyl number of 10 to 1800, preferably 50 to 1200 mg KOH/g, with excess polyisocyanates at temperatures of up to 150°C, preferably 50 to 130°C, in organic solvents which cannot react with isocyanates. The equivalents ratio of NCO groups to OH groups is between 2.0 : 1.0 and > 1.0: 1.0, preferably between 1.4: 1 and 1.1: 1.

The polyols used for preparing the NCO prepolymer may be of low and/or high molecular weight, and contain at least one anionic group or group capable of forming anions. Use may additionally be made of low molecular weight polyols having a molecular weight of 60 up to 400 daltons, for preparing the prepolymers containing isocyanate groups.

To obtain an NCO prepolymer of high flexibility, a high fraction of a predominantly linear polyol having a preferred OH number of 30 to 150 mg KOH/g ought to be added. Up to 97 wt% of the total polyol may consist of saturated and unsaturated polyesters having a number-average molecular weight Mₙ of 400 to 5000 daltons. Polyesterdiols are prepared by esterification of organic dicarboxylic acids or their anhydrides with organic diols, or derive from a hydroxycarboxylic acid or a lactone. Particular preference is given to using a linear polyester which is obtainable by reaction of aliphatic and aromatic dicarboxylic acids with aliphatic diols.

Besides the polyester, further polyols are used for preparing the NCO prepolymer, with at least one polyol containing a carboxylic, sulfonic acid and/or phosphonic acid groups. Preferred for use are alkanoic acids having two hydroxyl groups on the alpha carbon atom. These polyols have at least one, generally 1 to 3, carboxyl groups in a molecule. They have two to about 25, preferably 3 to 10, carbon atoms. The polyol containing carboxyl groups may make up to 3 to 100 wt%, preferably 5 to 50 wt%, of the entire polyol constituent in the NCO prepolymer.

The amount of ionizable carboxyl groups that is available through the carboxyl group neutralization in salt form is at least 0.4 wt%, preferably at least 0.7 wt%, based on the solids of the NCO prepolymer. The upper limit is about 12 wt%. The amount of dihydroxyalkanoic acids in the unneutralized prepolymer produces an acid number of 10 mg KOH/g to 40 mg KOH/g.

Further polyols, which contain no carboxyl, sulfonic acid and/or phosphonic acid groups, are preferably selected from diols of the formula (1) 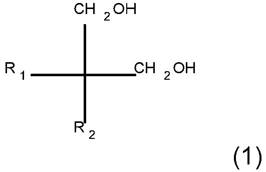 in which R₁ and R₂ each represent an identical or different radical and are an alkyl radical having 1 to 18 carbon atoms, an aryl radical or a cycloaliphatic radical.

Particularly preferred diols of the formula (1) are diols in which R₁ and R₂ are each a methyl radical.

The diols of formula (1) are used customarily in an amount of 0.5 to 15 wt%, preferably 1 to 7 wt%, based in each case on the total weight of the synthesis components used for preparing the anionically stabilized polyurethane polymers.

Typical polyfunctional isocyanates used for preparing the anionically stabilized polyurethane polymers are aliphatic, cycloaliphatic and/or aromatic polyisocyanates having at least two isocyanate groups per molecule. The isomers or isomer mixtures of organic diisocyanates are preferred. On account of their high stability toward ultraviolet light, (cyclo)aliphatic diisocyanates give rise to products with little yellowing tendency. The polyisocyanate component used to form the prepolymer may also include a fraction of polyisocyanates of higher functionality, provided that this does not cause any gelling. Established triisocyanates are products formed by trimerization or oligomerization of diisocyanates or by reaction of diisocyanates with polyfunctional compounds containing OH or NH groups. The average functionality may optionally be lowered by addition of monoisocyanates.

Examples of polyisocyanates which can be used are phenylene diisocyanate, tolylene diisocyanate, xylylene diisocyanate, bisphenylene diisocyanate, naphthylene diisocyanate, diphenylmethane diisocyanate, isophorone diisocyanate, cyclobutane diisocyanate, cyclopentylene diisocyanate, cyclohexylene diisocyanate, methylcyclohexylene diisocyanate, dicyclohexylmethane diisocyanate, ethylene diisocyanate, trimethylene diisocyanate, tetramethylene diisocyanate, pentamethylene diisocyanate, hexamethylene diisocyanate, propylene diisocyanate, ethylethylene diisocyanate, and trimethylhexane diisocyanate.

For producing high-solids, anionically stabilized polyurethane polymer dispersions, use is made in particular of diisocyanates of general formula (2), 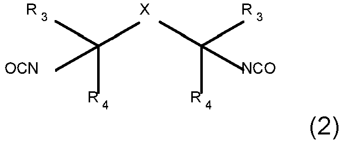 where X is a divalent cyclic and optionally aromatic hydrocarbon radical, preferably an optionally halogen-, methyl or methoxy-substituted dicyclohexylmethyl, naphthylene, diphenylene or 1,2-, 1,3- or 1,4-phenylene radical, more preferably a dicyclohexylmethyl radical, and R₃ and R₄ are hydrogen or an alkyl radical having 1-4 carbon atoms, preferably hydrogen. One diisocyanate of the formula (2) that is used with particular preference in the context of the present invention is 4,4'-methylenedicyclohexyl diisocyanate (also referred to as H₁₂MDI).

The NCO prepolymer contains at least 0.5 wt% of isocyanate groups, preferably at least 1 wt% of NCO, based on the solids. The upper limit is 15 wt%, preferably 10 wt%, more preferably 5 wt% of NCO.

The isocyanate groups of the prepolymer containing isocyanate groups are reacted with a modifier or chain extender. The modifier in that case is added preferably in an amount such that there are chain extensions and hence increases in molecular weight. Modifiers used are preferably organic compounds which contain hydroxyl and/or secondary and/or primary amino groups, more particularly polyols and/or polyamines having a functionality of two, three and/or more. Examples of polyamines which can be used are ethylenediamine, trimethylenediamine, tetramethylenediamine, pentamethylenediamine, hexamethylenediamine or diethylenetriamine. Examples of polyols which can be used are trimethylolpropane, 1,3,4-butanetriol, glycerol, erythritol, mesoerythritol, arabitol, adonitol, etc. Preference is given to using trimethylolpropane. The equivalents ratio of the prepolymer to the modifier is preferably between 2.0 : 1.0 and 1.0: 2.0, more particularly between 1.1 : 1 and 1: 1.1.

In the context of the present invention, the anionically stabilized polyurethane polymer is obtainable with particular preference by reaction of a NCO prepolymer with a modifier in the form of a polyol, especially trimethylolpropane, the NCO prepolymer being obtainable by reaction of
(i) 55 to 70 wt%, based on the total weight of the compounds (i) to (iv), of at least one polyester polyol having an OH number of 40 to 100 mg KOH/g, based on the solids content, and a number-average molecular weight Mₙ of 1000 to 3000 Da, with the polyester polyol preferably containing no olefinic double bonds,
(ii) 3 to 7 wt%, based on the total weight of the compounds (i) to (iv), of at least one alkanoic acid having 3 to 8 carbon atoms and also two hydroxyl groups on the alpha carbon atom, especially dimethylolpropionic acid,
(iii) 0.5 to 3 wt%, based on the total weight of the compounds (i) to (iv), of at least one polyol of the formula (1) where R₁ = R₂ = methyl, and
(iv) 25 to 30 wt%, based on the total weight of the compounds (i) to (iv), of at least one diisocyanate of the formula (2) where X = dicyclohexylmethyl radical and R₃ = R₄ = hydrogen.

The equivalents ratio of the prepolymer to the modifier is preferably between 2.0 : 1.0 and 1.0: 2.0, especially between 1.1: 1 and 1: 1.1.

It is an advantage in accordance with the invention if the anionically stabilized polyurethane polymer has a number-average molecular weight Mₙ of 750 to 2 000 000, preferably 750 to 1 000 000, more preferably 750 to 500 000, and more particularly 950 to 15 000 daltons, an acid number of 5 to 150, preferably 10 to 100, more preferably 15 to 80, and more particularly 20 to 35 mg KOH/g, and an OH number of 1 to 150, preferably 2 to 100, more preferably 5 to 70, and especially 10 to 25 mg KOH/g.

The anionically stabilized polyurethane polymer is neutralized with a base, preferably with an organic base, more particularly with N,N'-dimethylethanolamine, the base being added in an amount such that a degree of neutralization of 50% to 100%, preferably of 60% to 80%, is achieved. As a result of the addition of the base, the dispersion has a pH of 7.0 to 8.0.

To facilitate the dispersing of the partially neutralized anionically stabilized polyurethane polymer in water, an alkylene glycol is added, preferably propylene glycol, having an average molar mass Mₙ of 800 to 1500 Da.

The anionically stabilized binder (a-2), especially the above-described anionically stabilized polyurethane polymer, is present in the aqueous pigment paste A preferably in certain total amounts. The aqueous pigment paste A preferably comprises the at least one anionically stabilized binder (a-2), preferably the above-described anionically stabilized polyurethane polymer, in a total amount of 1 to 25 wt%, preferably of 3 to 20 wt%, more particularly of 5 to 17 wt%, based in each case on the total weight of the aqueous pigment paste A. Where different anionically stabilized binders (a-2) are used, the sum of all anionically stabilized binders (a-2) corresponds to the total amounts indicated above. With preference in accordance with the invention, the aqueous pigment paste A comprises only a single anionically stabilized binder (a-2), and therefore no mixture of different anionically stabilized binders is used. The use of the anionically stabilized binder (a-2), especially of the aqueous, anionically stabilized polyurethane polymer dispersion, as the sole anionically stabilized binder, in aqueous pigment paste A leads to outstanding stabilization of the color pigments and hence to a high storage stability of the pigment pastes.

### Nonionically stabilized binder (a-3):

Instead of the anionically stabilized binder (a-2), the aqueous pigment paste A may also comprise at least one nonionically stabilized binder (a-3). In one preferred embodiment, the aqueous pigment paste A comprises a mixture of an anionically stabilized binder (a-2), especially of the above-described anionically stabilized polyurethane polymer, and a nonionically stabilized binder (a-3).

Particularly preferred nonionically stabilized binders (a-3) are selected from nonionically stabilized acrylate copolymers in dispersion in water, with the acrylate polymers comprising monomer units having anchor groups for interaction and stable dispersion of color pigments (a-1), and also monomer units having hydrophilic sections for stabilization of the nonionically stabilized acrylate copolymer in aqueous solution. **It** is therefore preferred in accordance with the invention if the nonionically stabilized binder (a-3) of the pigment paste A is a nonionically stabilized acrylate copolymer in dispersion in water, the nonionically stabilized acrylate copolymer being obtainable by reaction of
(I) at least one anchor group monomer unit having at least one ionizable functional group, a functional group with active hydrogen, or a combination thereof, where
   - the ionizable functionality is other than a carboxylic acid group in which the carbonyl carbon is separated from the closest ethylenically unsaturated carbon by at least four atoms,
   - the anchor group monomer units (a) contain no polyoxyalkylene groups, and
   - one of the anchor group monomer units is copolymerized 1-(2-methacryloyloxyethyl)-2-imidazolidinone;
(II) 5 wt% to 45 wt%, based on the total weight of the monomers, of at least one monomer unit comprising a polyoxyalkylene group, a gamma-hydroxycarbamate group, a beta-hydroxycarbamate group, and a combination thereof; and
(III) 1 to 50 weight percent, based on the total weight of the monomers, of at least one aromatic monomer unit.

Suitable monomers for the anchor group monomer unit (I) are selected from the group of (meth)acrylic acid, ethacrylic acid, crotonic acid, maleic acid and monoesters thereof, fumaric acid and monoesters thereof, itaconic acid and monoesters thereof, vinylbenzoic acid, alpha-methylvinylbenzoic acid, p-vinylbenzenesulfonic acid or p-vinylbenzenephosphonic acid, mono(meth)acryloyloxyethyl maleate, succinate or phthalate, amine-containing ethylenically unsaturated monomers, such as tert-butylaminoethyl (meth)acrylate, dimethylaminoethyl (meth)acrylate, dimethylaminoethyl (meth)acrylate, N,N-dimethylaminopropyl(meth)acrylamide, N,N-diethylamino-alpha-methylstyrene, N,N-diethylaminostyrene, allylamine, crotylamine, glycidyl (meth)acrylate or other glycidyl-containing ethylenically unsaturated monomers in which the glycidyl group is reacted with monoamines such as cyclohexylamine before, during or after the polymerization, amino acids, hydroxyl-functional ethylenically unsaturated monomers such as hydroxyethyl (meth)acrylate, hydroxypropyl (meth)acrylate, and hydroxybutyl (meth)acrylate, esters of epsilon-caprolactone and hydroxyalkyl (meth)acrylates such as the commercially available monomer Tone 100M (from Dow Chemicals), acrylamide, methacrylamide, carbamatoalkyl (meth)acrylates, carbamyloxyalkyl (meth)acrylates such as 2-carbamyloxyethyl methacrylate and 4-carbamyloxybutyl acrylate, monomers with alkoxysilane or silanol functionalization such as triethoxysilane, ethylenically unsaturated monomers having urea groups or hydrazine groups, such as 2-(2-oxo-1-imidazolidinyl)ethyl (meth)acrylate, and also suitable mixtures. More preferably the anchor group monomer unit (I) is selected from hydroxyethyl (meth)acrylate, N,N-dimethylaminopropyl(meth)acrylamide, 2-(2-oxo-1-imidazolidinyl)ethyl (meth)acrylate, and mixtures of these monomers.

Suitable examples of monomer units (II) are selected from β-carboxyethyl acrylate, monomethacryloyloxyethyl hexahydrophthalate, Ω-methyloxy-polyoxyethylene (meth)acrylates, and Ω-methyloxypoly(oxyethylene-co-oxypropylene) (meth)acrylates having molecular weights of 1000 to 3000 Da. Used more preferably as monomer unit (II) is Ω-methyloxy-polyoxyethylene (meth)acrylate, the amount of this monomer being 5 to 50 wt%, from 10 to 40 wt%, more particularly 15 to 35 wt%, based on the total amount of monomers. The amount of stabilizer monomer units indicated above ensures that on the one hand the nonionically stabilized acrylate copolymer has sufficient dispersibility in water, but on the other hand that the water resistance of the aqueous coating materials is not adversely affected.

Preferred aromatic monomer units (III) are selected from vinylaromatic compounds, such as styrene, α-methylstyrene, vinyltoluene, t-butylstyrene, and mixtures thereof. The aromatic monomer units (III) are used preferably in a total amount of 15 to 25 wt%, based on the total weight of the monomers. Styrene is used more preferably in a total amount of 15 to 25 wt%, based on the total weight of the monomers.

Besides the above-recited monomers (I) to (III), further ethylenically unsaturated nonionic monomers may be used for preparing the acrylate copolymer. Such monomers are selected for example from the group of esters of acrylic acid, methacrylic acid, and crotonic acid, monoesters and diesters of α,β-ethylenically unsaturated dicarboxylic acids with 4 to 6 carbon atoms, vinyl esters, vinyl ethers, vinyl ketones, and heterocyclic aliphatic vinyl compounds. Suitable esters of acrylic acid, methacrylic acid, and crotonic acid are, for example, methyl, ethyl, propyl, isopropyl, n-butyl, isobutyl, tert-butyl, hexyl, 2-ethylhexyl, dodecyl, cyclohexyl, isobornyl, lauryl, and stearyl esters of acrylic acid, methacrylic acid, and crotonic acid. Further examples are monoesters of fumaric acid, maleic acid and itaconic acid, and also diesters thereof with alcohols such as methanol, ethanol, propanol, isopropanol, butanol, isobutanol, and tert-butanol. Further suitable monomers are vinyl acetate, vinyl propionate, vinyl ethers such as vinyl ethyl ether, vinyl halides and vinylidene halides, vinyl ethyl ketone, and 2-vinylpyrrolidone. With particular preference alkyl esters of acrylic acid and methacrylic acid, especially butyl acrylate and methyl methacrylate, are used as further monomers.

The nonionically stabilized acrylate copolymer may be prepared by known methods, such as bulk or solution polymerization. The polymerization may be carried out as a volatile radical polymerization. The free radicals are provided typically by a redox initiator or an organic peroxo or azo compound. Suitable initiators are selected from the group of ammonium peroxydisulfate, potassium peroxydisulfate, sodium metabisulfite, hydrogen peroxide, tert-butyl hydroperoxide, dilauryl peroxide, tert-butyl peroxybenzoate, tert-butyl per-2-ethylhexanoate, di-tert-butyl peroxide, 2,2'-azobis(isobutyronitrile), 2,2'-azobis(isovaleronitrile), and also redox initiators such as ammonium peroxydisulfate and sodium metabisulfite with iron(II) ammonium sulfate. Moreover, the polymerization may be carried out as an anionic, cationic, and controlled radical polymerization.

The nonionically stabilized acrylate copolymer preferably has a weight-average molecular weight M_{w} of 8000 to 70 000 Da, the molecular weight M_{w} being determined by gel permeation chromatography using polymethyl methacrylate as a standard. The glass transition temperature T_{g} of the nonionically stabilized acrylate copolymer is preferably from -30 to 180°C, more particularly from 0 to 120°C and may be determined using differential scanning calorimetry (DSC).

Used more preferably are nonionically stabilized acrylate copolymers (a-3) in dispersion in water, the nonionically stabilized acrylic copolymer being obtainable by reaction of
(I) 25 to 35 wt%, based on the total weight of the monomers, of hydroxyl-functional ethylenically unsaturated monomers, ethylenically unsaturated monomers having urea groups, amine-containing ethylenically unsaturated monomers, and mixtures thereof, more particularly a mixture of hydroxyethyl (meth)acrylate, N,N'-dimethylaminopropylacrylamide, and 2-(2-oxo-1-imidazolidinyl)ethyl (meth)acrylate,
(II) 25 wt% to 35 wt%, based on the total weight of the monomers, of Ω- methyloxy-polyoxyethylene (meth)acrylate,
iii) 15 to 25 wt%, based on the total weight of the monomers, of vinylaromatic compounds, more particularly styrene, and
(IV) 15 to 25 wt%, based on the total weight of the monomers, of C₁-C₁₀ alkyl acrylates and C₁-C₁₀ alkyl methacrylates, more particularly n-butyl acrylate and methyl methacrylate.

The nonionically stabilized binder (a-3), more particularly the above-described nonionically stabilized acrylate copolymer, is present in the aqueous pigment paste A preferably in certain total amounts. The aqueous pigment paste A preferably comprises the at least one nonionically stabilized binder (a-3), more particularly the above-described nonionically stabilized acrylate copolymer, in a total amount of 0.5 to 20 wt%, preferably of 1 to 15 wt%, more particularly of 2 to 13 wt%, based in each case on the total weight of the aqueous pigment paste A. Where different nonionically stabilized binders (a-3) are used, the sum of all the nonionically stabilized binders (a-3) corresponds to the total amounts indicated above. With preference in accordance with the invention, the aqueous pigment paste A comprises only a single nonionically stabilized binder (a-3), and therefore no mixture of different nonionically stabilized binders (a-3) is used. The use of the nonionically stabilized binder (a-3), especially of the nonionically stabilized acrylate copolymer dispersion in water, as the sole nonionically stabilized binder (a-3), in aqueous pigment paste A leads to outstanding stabilization of the color pigments and hence to a high storage stability and also freeze-thaw stability of the pigment pastes.

In the context of the present invention it is advantageous if the aqueous pigment paste A comprises a certain weight ratio of nonionically stabilized binder (a-3) to anionically stabilized binder (a-2). It is therefore preferred in accordance with the invention if the at least one pigment paste A comprises a weight ratio of the total amount of nonionically stabilized binder (a-3) to the total amount of anionically stabilized binder (a-2) of 0.1 to 3, more particularly of 0.25 to 1.5, based in each case on the solids content. With particular preference, anionically stabilized binder (a-2) comprises the aforesaid aqueous dispersion of the anionically stabilized polyurethane polymer, and as nonionically stabilized binder (a-3) comprises the above-described aqueous dispersion of the nonionically stabilized acrylate copolymer. The use of the binders in the weight ratios recited above results in a high freeze-thaw stability.

The aqueous pigment paste A may be prepared with a very low VOC and preferably has a VOC of less than or equal to 250 g/L. To achieve this VOC, the aqueous pigment paste A ought to include as little organic solvents as possible. In one particularly preferred embodiment of the first subject of the invention, therefore, the at least one pigment paste A comprises organic solvent in a total amount of 0 to 10 wt%, preferably of 0 to 9.8 wt%, more particularly of 0 to 9.5 wt%, based in each case on the total weight of the aqueous pigment paste A. The term "organic solvent" refers to volatile compounds which at 20°C have a vapor pressure of more than 10 pascals and/or which possess an initial boiling point of less than or equal to 250°C at a standard pressure of 101.3 kPa.

### Further constituents:

The at least one aqueous pigment paste A may further comprise other customary additives, such as crosslinking agents, coatings additives, thickeners, and radiation-curable constituents. Suitable further constituents are listed for example in DE 199 21 457 A1.

The aqueous pigment paste A is generally prepared by initially introducing the anionically stabilized binder (a-2) and mixing it with water, additives, pigment, or a paste of the effect-imparting and optionally color-imparting pigment (a-1) in solvent. Then the nonionically stabilized binder (a-3) is added, and mixing is repeated. In the case of plated-shaped effect pigments, care should be taken not to damage them during mixing.

The aqueous pigment paste A of the invention exhibits an outstanding freeze-thaw stability. By contrast, aqueous pigment pastes which contain no anionically and/or nonionically stabilized binder, more particularly no aforementioned anionically stabilized binder (a-2) and nonionically stabilized binder (a-3), do not have an adequate freeze-thaw stability.

Particularly preferred embodiments AF1 to AF12 of the aqueous pigment paste A are shown below (all quantities are based on the total weight of the aqueous pigment paste A; where dispersions are used, all quantities are based on the solids content of the dispersions within the total weight of the aqueous pigment paste A).
AF1: Aqueous pigment paste A, containing 2.5 to 47 wt% of at least one color pigment (a-1) and also at least one nonionically stabilized binder (a-3).
AF2: Aqueous pigment paste A, containing 2.5 to 47 wt% of at least one color pigment (a-1) and also 2 to 13 wt% of at least one nonionically stabilized binder (a-3).
AF3: Aqueous pigment paste A, containing 2.5 to 47 wt% of at least one color pigment (a-1) and also at least one anionically stabilized binder (a-2).
AF4: Aqueous pigment paste A, containing 2.5 to 47 wt% of at least one color pigment (a-1) and also 5 to 17 wt% of at least one anionically stabilized binder (a-2).
AF5: Aqueous pigment paste A, containing at least one color pigment (a-1), especially 2.5 to 47 wt% of at least one color pigment, and also at least one anionically stabilized binder (a-2) and at least one nonionically stabilized binder (a-3).
AF6: Aqueous pigment paste A, containing 2.5 to 47 wt% of at least one color pigment (a-1) and also 2 to 13 wt% of at least one nonionically stabilized binder (a-3) and 5 to 17 wt% of at least one anionically stabilized binder (a-2).
AF7: Aqueous pigment paste A, containing a weight ratio of the total amount of nonionically stabilized binder (a-3) to the total amount of anionically stabilized binder (a-2) of 0.1 to 3, especially of 0.25 to 1.5, based in each case on the solids content of the binders.
AF8: Aqueous pigment paste A according to any of embodiments AF1 to AF7, further comprising at least one effect pigment.
AF9: Aqueous pigment paste A according to any of embodiments AF1, AF2, and AF5 to AF8, where the nonionically stabilized binder (a-3) is a nonionically stabilized acrylate copolymer in dispersion in water, and where the nonionically stabilized acrylate polymer is obtainable by reaction of
   (I) 25 to 35 wt%, based on the total weight of the monomers, of hydroxyl-functional ethylenically unsaturated monomers, ethylenically unsaturated monomers having urea groups, amine-containing ethylenically unsaturated monomers, and mixtures thereof, more particularly a mixture of hydroxyethyl (meth)acrylate, N,N'-dimethylaminopropylacrylamide, and 2-(2-oxo-1-imidazolidinyl)ethyl (meth)acrylate,
   (II) 25 wt% to 35 wt%, based on the total weight of the monomers, of Ω- methyloxy-polyoxyethylene (meth)acrylate,
   iii) 15 to 25 wt%, based on the total weight of the monomers, of vinylaromatic compounds, more particularly styrene, and
   (IV) 15 to 25 wt%, based on the total weight of the monomers, of C₁-C₁₀ alkyl acrylates and C₁-C₁₀ alkyl methacrylates, more particularly n-butyl acrylate and methyl methacrylate.
AF10: Aqueous pigment paste A according to embodiment AF9, where the nonionically stabilized acrylate copolymer has a weight-average molecular weight M_{w} of 8000 to 70 000 Da and a glass transition temperature T_{g} of -30 to 180°C, especially of 0 to 120°C.
AF11: Aqueous pigment paste A according to any of embodiments AF3 to AF8, where the anionically stabilized binder (a-2) has a number-average molecular weight Mₙ of 750 to 2 000 000, preferably 750 to 1 000 000, more preferably 750 to 500 000 and more particularly 950 to 15 000 daltons, an acid number of 5 to 150, preferably 10 to 100, more preferably 15 to 80, and especially 20 to 35 mg KOH/g, and an OH number of 1 to 150, preferably 2 to 100, more preferably 5 to 70, and especially 10 to 25 mg KOH/g.
AF12: Aqueous pigment paste A according to any of embodiments AF3 to AF8 and also AF11, where the anionically stabilized binder (a-2) is an anionically stabilized polyurethane polymer in dispersion in water, where the anionically stabilized polyurethane polymer is obtainable by reaction of an NCO prepolymer with a modifier in the form of a polyol, especially trimethylolpropane, in an equivalents ratio of NCO prepolymers to modifier of 1.1 : 1 to 1 : 1.1, and where the NCO prepolymer is obtainable by reaction of
   (i) 55 to 70 wt%, based on the total weight of the compounds (i) to (iv), of at least one polyester polyol having an OH number of 40 to 100 mg KOH/g, based on the solids content, and a number-average molecular weight Mₙ of 1000 to 3000 Da, with the polyester polyol preferably containing no olefinic double bonds,
   (ii) 3 to 7 wt%, based on the total weight of the compounds (i) to (iv), of at least one alkanoic acid having 3 to 8 carbon atoms and also two hydroxyl groups on the alpha carbon atom, especially dimethylolpropionic acid,
   iii) 0.5% to 3% by weight based on the total weight of the compounds (i) to (iv), of at least one polyol of the formula (1); 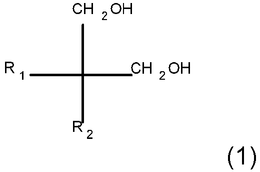 where R₁ = R₂ = methyl, and
   ii) 25% to 30 wt%, based on the total weight of the compounds (i) to (iv), of at least one diisocyanate of the formula (2) 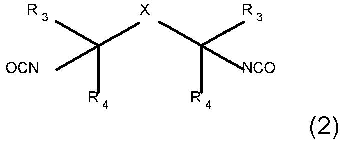 where X = dicyclohexylmethyl radical and R₃ = R₄ = hydrogen.

The above-recited embodiments AF1 to AF12 of the aqueous pigment paste A exhibit stable dispersion of the pigments contained, and therefore possess a high storage stability. Moreover, as a result of the stable dispersion, high shade accuracy and also good hiding are achieved. Furthermore, the use of nonionically and/or anionically stabilized binders, especially the above-recited specific binders, leads to good mechanical properties, more particularly good adhesion on the original finish, high condensation resistance, and good stonechip adhesion, of the aqueous coating materials. In addition, an outstanding freeze-thaw stability is achieved.

### Component (B)

Component (B) of the mixer system of the invention is an aqueous mixing clear resin component, i.e. a component being arranged to majorly provide those constituents of the resulting coating material that are responsible for film forming and further properties like rheology and general application properties. Accordingly, the mixer system contains two types of main components as essential components, i.e. component (A) and component (B). While component (B) serves for the before-mentioned properties and thus contains main binder resins of the resulting coating material and also typical additives to provide and adjust respective material properties, component (A) in particular contains color pigments and thus provides for the coloristic properties of the coating material. The above also means that component (B) does not contain any or any significant portions of color pigments, but preferably is free of such color pigments. Even more preferably, component B comprises no effect pigments, color pigments, and fillers. Preferably, therefore, in component B there is 0 wt%, based on the total weight of component B, of effect pigments, color pigments, and fillers. This condition is also referred to as "pigment-free" within the context of the present invention.

Preferably, also component B has a VOC of less than or equal to 250 g/L.

### Aqueous dispersion (wD) comprising an acrylic-based multi-stage polymer:

As an essential constituent, component (B) comprises an aqueous dispersion (wD) comprising a specific acrylic-based multi-stage polymer. To realize the multi-stage character of the polymer, it is produced by successive radical emulsion polymerization of at least two mixtures (M) of olefinically unsaturated monomers. This means, quite apparently, that i. a first mixture (MA) is polymerized via radical emulsion polymerization and then ii. a second mixture (MB) is polymerized via radical emulsion polymerization in the presence of the polymer prepared under i. Optionally, this principle may be continued, i.e. further mixtures (MX) may be polymerized in the presence of a respectively pre-produced polymer. All applied polymer mixtures are thus polymerized via radical emulsion polymerization conducted separately in each case (that is, a stage, or else polymerization stage), with these stages taking place in succession. In terms of time, the stages may take place directly one after another. It is equally possible for the corresponding reaction solution after the end of one stage to be stored for a certain time and/or transferred to a different reaction vessel, and only then for the next stage to take place.

The concept of radical emulsion polymerization is familiar to the skilled person and is elucidated in greater precision again below, moreover.

In a polymerization of this kind, olefinically unsaturated monomers are polymerized in an aqueous medium, using at least one water-soluble initiator, and in the presence of at least one emulsifier.

Corresponding water-soluble initiators are likewise known. The at least one water-soluble initiator is preferably selected from the group consisting of potassium, sodium, or ammonium peroxodisulfate, hydrogen peroxide, tert-butyl hydroperoxide, 2,2'-azo-bis(2-amidoisopropane) dihydrochloride, 2,2'-azobis(N,N'-dimethyleneisobutyramidine) dihydrochloride, 2,2'-azobis(4-cyanopentanoic acid), and mixtures of the aforementioned initiators, such as hydrogen peroxide and sodium persulfate, for example. Likewise, members of the stated preferred group are the redox initiator systems that are known per se.

By redox initiator systems are meant in particular those initiators which comprise at least one peroxide-containing compound in combination with at least one redox coinitiator, examples being reductive sulfur compounds such as, for example, bisulfites, sulfites, thiosulfates, dithionites or tetrathionates of alkali metals and ammonium compounds, sodium hydroxymethanesulfinate dihydrate and/or thiourea. Accordingly it is possible to use combinations of peroxodisulfates with alkali metal or ammonium hydrogensulfites, examples being ammonium peroxidisulfate and ammonium disulfite. The weight ratio of peroxide-containing compounds to the redox coinitiators is preferably 50:1 to 0.05:1.

**In** combination with the initiators it is possible additionally to use transition metal catalysts, such as salts of iron, nickel, cobalt, manganese, copper, vanadium, or chromium, for example, such as iron(II) sulfate, cobalt(II) chloride, nickel(II) sulfate, copper(I) chloride, manganese(II) acetate, vanadium(III) acetate, manganese(II) chloride. Based on the total mass of the olefinically unsaturated monomers used in a polymerization, these transition metal salts are employed customarily in amounts of 0.1 to 1000 ppm. Hence it is possible to use combinations of hydrogen peroxide with iron(II) salts, such as, for example, 0.5 to 30 wt% of hydrogen peroxide and 0.1 to 500 ppm of Mohr's salt, in which case the fractional ranges are based in each case on the total weight of the monomers used in the respective polymerization stage.

The initiators are used preferably in an amount of 0.05 to 20 wt%, preferably 0.05 to 10, more preferably from 0.1 to 5 wt%, based on the total weight of the monomers used in the respective polymerization stage.

An emulsion polymerization takes place within a reaction medium that comprises water as continuous medium and comprises the at least one emulsifier in the form of micelles. The polymerization is initiated by decomposition of the water-soluble initiator in the water. The growing polymer chain enters the emulsifier micelles, and the further polymerization then takes place in the micelles. In addition to the monomers, the at least one water-soluble initiator, and the at least one emulsifier, the reaction mixture therefore consists primarily of water. The stated components, namely monomers, water-soluble initiator, emulsifier, and water, preferably account for at least 95 wt% of the reaction mixture. The reaction mixture preferably consists of these components.

The at least one emulsifier is used preferably in an amount of 0.1-10 wt%, more preferably 0.1-5 wt%, very preferably 0.1-3 wt%, based in each case on the total weight of the monomers used in the respective polymerization stage.

Emulsifiers as well are known in principle. Use may be made of nonionic or ionic emulsifiers, including zwitterionic emulsifiers, and also, optionally, mixtures of the aforementioned emulsifiers.

Preferred emulsifiers are optionally ethoxylated and/or propoxylated alkanols having 10 to 40 carbon atom. They may have different degrees of ethoxylation and/or propoxylation (for example, adducts modified with poly(oxy)ethylene and/or poly(oxy)propylene chains consisting of 5 to 50 molecule units). Also possible for use are sulfated, sulfonated, or phosphated derivatives of the stated products. Such derivatives are generally employed in neutralized form.

Particularly preferred emulsifiers suitable are neutralized dialkylsulfosuccinic esters or alkyldiphenyl oxide disulfonates, available commercially for example as EF-800 from Cytec.

The emulsion polymerizations are carried out usefully at a temperature of 0 to 160°C, preferably of 15 to 95°C, more preferably of 60 to 95°C.

It is preferred here to operate in the absence of oxygen, and preferably under an inert gas atmosphere. The polymerization is generally carried out under atmospheric pressure, although the application of lower pressures or higher pressures is also possible. Particularly if polymerization temperatures are employed which lie above the boiling point under atmospheric pressure of water, of the monomers used and/or of the organic solvents, it is usual to select higher pressures.

In a preferred embodiment of the present invention, the preparation of the multi-stage polymer of the aqueous dispersion (wD) encompasses the successive radical emulsion polymerization of three mixtures (MA), (MB), and (MC) of olefinically unsaturated monomers. The process is therefore a multistage radical emulsion polymerization, in which i. first of all the mixture (MA) is polymerized, then ii. the mixture (MB) is polymerized in the presence of the polymer prepared under i., and additionally iii. the mixture (MC) is polymerized in the presence of the polymer prepared under ii. Even more preferably, the preparation of the multi-stage emulsion polymer involves exactly and only these three polymerization steps. Therefore, the multi-stage polymer preferably a seed-core-shell polymer (i.e. having three different parts going back to the three polymerization steps).

The individual polymerization stages in the preparation of the specific polymer may be carried out, for example, as what are called "starved feed" polymerizations (also known as "starve feed" or "starve fed" polymerizations).

A starved feed polymerization in the sense of the present invention is an emulsion polymerization in which the amount of free olefinically unsaturated monomers in the reaction solution (also called reaction mixture) is minimized throughout the reaction time. This means that the metered addition of the olefinically unsaturated monomers is such that over the entire reaction time the fraction of free monomers in the reaction solution does not exceed 6.0 wt%, preferably 5.0 wt%, more preferably 4.0 wt%, particularly advantageously 3.5 wt%, based in each case on the total amount of the monomers used in the respective polymerization stage. Further preferred within these structures are concentration ranges for the olefinically unsaturated monomers of 0.01 to 6.0 wt%, preferably 0.02 to 5.0 wt%, more preferably 0.03 to 4.0 wt%, more particularly 0.05 to 3.5 wt%. For example, the highest weight fraction detectable during the reaction may be 0.5 wt%, 1.0 wt%, 1.5 wt%, 2.0 wt%, 2.5 wt%, or 3.0 wt%, while all other values detected then lie below the values indicated here. The total amount (also called total weight) of the monomers used in the respective polymerization stage evidently corresponds for stage i. to the total amount of the monomer mixture (MA), for stage ii. to the total amount of the monomer mixture (MB), and for potential further stages like the preferred stage iii. to the total amount of the respectively applied monomer mixture like the monomer mixture (MC).

The concentration of the monomers in the reaction solution here may be determined by gas chromatography, for example. In that case a sample of the reaction solution is cooled with liquid nitrogen immediately after sampling, and 4-methoxyphenol is added as an inhibitor. In the next step, the sample is dissolved in tetrahydrofuran and then n-pentane is added in order to precipitate the polymer formed at the time of sampling. The liquid phase (supernatant) is then analyzed by gas chromatography, using a polar column and an apolar column for determining the monomers, and a flame ionization detector. Typical parameters for the gas-chromatographic determination are as follows: 25 m silica capillary column with 5% phenyl-, 1% vinyl-methylpolysiloxane phase, or 30 m silica capillary column with 50% phenyl-, 50% methyl-polysiloxane phase, carrier gas hydrogen, split injector 150°C, oven temperature 50 to 180°C, flame ionization detector, detector temperature 275°C, internal standard isobutyl acrylate. The concentration of the monomers is determined, for the purposes of the present invention, preferably by gas chromatography, more particularly in compliance with the parameters specified above.

The fraction of the free monomers can be controlled in various ways.

One possibility for keeping the fraction of the free monomers low is to select a very low metering rate for the mixture of the olefinically unsaturated monomers into the actual reaction solution wherein the monomers make contact with the initiator. **If** the metering rate is so low that all of the monomers are able to react virtually immediately when they are in the reaction solution, it is possible to ensure that the fraction of the free monomers is minimized.

In addition to the metering rate it is important that there are always sufficient radicals present in the reaction solution to allow each of the added monomers to react extremely quickly. In this way, further chain growth of the polymer is guaranteed, and the fraction of free monomer is kept low.

For this purpose, the reaction conditions are preferably selected such that the initiator feed is commenced even before the start of the metering of the olefinically unsaturated monomers. The metering is preferably commenced at least 5 minutes beforehand, more preferably at least 10 minutes before. With preference at least 10 wt% of the initiator, more preferably at least 20 wt%, very preferably at least 30 wt% of the initiator, based in each case on the total amount of initiator, is added before the metering of the olefinically unsaturated monomers is commenced.

Preference is given to selecting a temperature which allows constant decomposition of the initiator.

The amount of initiator is likewise an important factor for the sufficient presence of radicals in the reaction solution. The amount of initiator should be selected such that at any given time there are sufficient radicals available, allowing the added monomers to react. If the amount of initiator is increased, it is also possible to react greater amounts of monomers at the same time.

A further factor determining the reaction rate is the reactivity of the monomers.

Control over the fraction of the free monomers can therefore be guided by the interplay of initiator quantity, rate of initiator addition, rate of monomer addition, and through the selection of the monomers. Not only a slowing-down of metering but also an increase in the initial quantity, and also the premature commencement of addition of the initiator, serve the aim of keeping the concentration of free monomers below the limits stated above.

At any point during the reaction, the concentration of the free monomers can be determined by gas chromatography, as described above.

Should this analysis find a concentration of free monomers that comes close to the limit in value for the starved feed polymerization, as a result, for example, of small fractions of highly reactive olefinically unsaturated monomers, the parameters referred to above can be utilized in order to control the reaction. In this case, for example, the metering rate of the monomers can be reduced, or the amount of initiator can be increased.

For the purposes of the present invention it is preferable for the polymerization stages ii. and iii. to be carried out under starved feed conditions. This has the advantage that the formation of new particle nuclei within these two polymerization stages is effectively minimized. Instead, the particles existing after stage i. (and therefore also called seed below) can be grown further in stage ii. by the polymerization of the monomer mixture B (therefore also called core below). It is likewise possible for the particles existing after stage ii. (also below called polymer comprising seed and core) to be grown further in stage iii. through the polymerization of the monomer mixture C (therefore also called shell below), resulting ultimately in a polymer comprising particles containing seed, core, and shell.

Stage i. as well can of course also be carried out under staved feed conditions.

The mixtures (MA) and (MB), and optional further mixtures (MX) are mixtures of olefinically unsaturated monomers. Suitable olefinically unsaturated monomers may be mono- or polyolefinically unsaturated.

Described first of all below are monomers which can be used in principle and which are suitable across all mixtures (M) and are monomers that are optionally preferred. Specific essential and preferred embodiments of the individual mixtures will be addressed thereafter.

Examples of suitable monoolefinically unsaturated monomers include, in particular, (meth)acrylate-based monoolefinically unsaturated monomers, monoolefinically unsaturated monomers containing allyl groups, and other monoolefinically unsaturated monomers containing vinyl groups, such as vinylaromatic monomers, for example. The term (meth)acrylic or (meth)acrylate for the purposes of the present invention encompasses both methacrylates and acrylates. Preferred for use at any rate, although not necessarily exclusively, are (meth)acrylate-based monoolefinically unsaturated monomers.

(Meth)acrylate-based, monoolefinically unsaturated monomers may be, for example, (meth)acrylic acid and esters, nitriles, or amides of (meth)acrylic acid.

Preference is given to esters of (meth)acrylic acid having a non-olefinically unsaturated radical R.

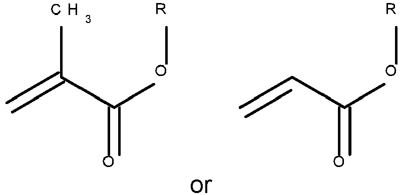

The radical R may be saturated aliphatic, aromatic, or mixed saturated aliphatic-aromatic. Aliphatic radicals for the purposes of the present invention are all organic radicals which are not aromatic. Preferably the radical R is aliphatic.

The saturated aliphatic radical may be a pure hydrocarbon radical or it may include heteroatoms from bridging groups (for example, oxygen from ether groups or ester groups) and/or may be substituted by functional groups containing heteroatoms (alcohol groups, for example). For the purposes of the present invention, therefore, a clear distinction is made between bridging groups containing heteroatoms and functional groups containing heteroatoms (that is, terminal functional groups containing heteroatoms).

Preference is given at any rate, though not necessarily exclusively, to using monomers in which the saturated aliphatic radical R is a pure hydrocarbon radical (alkyl radical), in other words one which does not include any heteroatoms from bridging groups (oxygen from ether groups, for example) and is also not substituted by functional groups (alcohol groups, for example).

If R is an alkyl radical, it may for example be a linear, branched, or cyclic alkyl radical. Such an alkyl radical may of course also have linear and cyclic or branched and cyclic structural components. The alkyl radical preferably has 1 to 20, more preferably 1 to 10, carbon atoms.

Particularly preferred monounsaturated esters of (meth)acrylic acid with an alkyl radical are methyl (meth)acrylate, ethyl (meth)acrylate, propyl (meth)acrylate, isopropyl (meth)acrylate, n-butyl (meth)acrylate, isobutyl (meth)acrylate, tert-butyl (meth)acrylate, amyl (meth)acrylate, hexyl (meth)acrylate, ethylhexyl (meth)acrylate, 3,3,5-trimethylhexyl (meth)acrylate, stearyl (meth)acrylate, lauryl (meth)acrylate, cycloalkyl (meth)acrylates, such as cyclopentyl (meth)acrylate, isobornyl (meth)acrylate, and also cyclohexyl (meth)acrylate, with very particular preference being given to n- and tert-butyl (meth)acrylate and to methyl methacrylate.

Examples of other suitable radicals R are saturated aliphatic radicals which comprise functional groups containing heteroatoms (for example, alcohol groups or phosphoric ester groups).

Suitable monounsaturated esters of (meth)acrylic acid with a saturated aliphatic radical substituted by one or more hydroxyl groups are 2-hydroxyethyl (meth)acrylate, 2-hydroxypropyl (meth)acrylate, 3-hydroxypropyl (meth)acrylate, 3-hydroxybutyl (meth)acrylate, and 4-hydroxybutyl (meth)acrylate, with very particular preference being given to 2-hydroxyethyl (meth)acrylate.

Suitable monounsaturated esters of (meth)acrylic acid with phosphoric ester groups are, for example, phosphoric esters of polypropylene glycol monomethacrylate, such as the commercially available Sipomer PAM 200 from Rhodia.

Possible further monoolefinically unsaturated monomers containing vinyl groups are monomers which are different from the above-described acrylate-based monomers and which have a radical R' on the vinyl group that is not olefinically unsaturated.

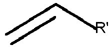

The radical R' may be saturated aliphatic, aromatic, or mixed saturated aliphatic-aromatic, with preference being given to aromatic and mixed saturated aliphatic-aromatic radicals in which the aliphatic components represent alkyl groups.

Particularly preferred further monoolefinically unsaturated monomers containing vinyl groups are, in particular, vinyltoluene, alpha-methylstyrene, and especially styrene. Also possible are monounsaturated monomers containing vinyl groups wherein the radical R' has the following structure: 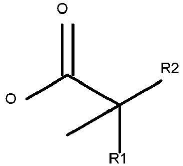 where the radicals R1 and R2 as alkyl radical contain a total of 7 carbon atoms. Monomers of this kind are available commercially under the name VeoVa 10 from Momentive.

Further monomers suitable in principle are olefinically unsaturated monomers such as acrylonitrile, methacrylonitrile, acrylamide, methacrylamide, N-dimethylacrylamide, vinyl acetate, vinyl propionate, vinyl chloride, N-vinylpyrrolidone, N-vinylcaprolactam, N-vinylformamide, N-vinylimidazole, N-vinyl-2-methylimidazoline, and further unsaturated alpha-beta-carboxylic acids.

Examples of suitable polyolefinically unsaturated monomers include esters of (meth)acrylic acid with an olefinically unsaturated radical R". The radical R" may be, for example, an allyl radical or a (meth)acryloyl radical.

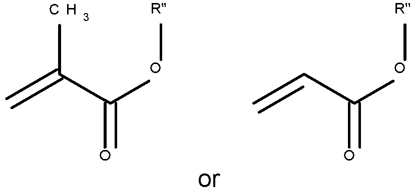

Preferred polyolefinically unsaturated monomers include ethylene glycol di(meth)acrylate, 1,2-propylene glycol di(meth)acrylate, 2,2-propylene glycol di(meth)-acrylate, butane-1,4-diol di(meth)acrylate, neopentyl glycol di(meth)acrylate, 3-methylpentanediol di(meth)acrylate, diethylene glycol di(meth)acrylate, triethylene glycol di(meth)acrylate, tetraethylene glycol di(meth)acrylate, dipropylene glycol di(meth)acrylate, tripropylene glycol di(meth)acrylate, hexanediol di(meth)acrylate, and allyl (meth)acrylate.

Furthermore, preferred polyolefinically unsaturated compounds encompass acrylic and methacrylic esters of alcohols having more than two OH groups, such as, for example, trimethylolpropane tri(meth)acrylate or glycerol tri(meth)acrylate, but also trimethylolpropane di(meth)acrylate monoallyl ether, trimethylolpropane (meth)acrylate diallyl ether, pentaerythritol tri(meth)acrylate monoallyl ether, pentaerythritol di(meth)acrylate diallyl ether, pentaerythritol (meth)acrylate triallyl ether, triallylsucrose, and pentaallylsucrose.

Also possible are allyl ethers of mono- or polyhydric alcohols, such as trimethylolpropane monoallyl ether, for example.

Where used, preferred polyolefinically unsaturated monomers are hexanediol diacrylate and/or allyl (meth)acrylate.

With regard to the monomer mixtures (M) used in the individual polymerization stages, there are specific essential or preferred conditions to be observed, which are set out below.

First of all, it should be stated that the mixtures (M) are at any rate different from one another. They therefore each contain different monomers and/or different proportions of at least one defined monomer.

Secondly, it is an essential feature of the present invention that the mixture (M) applied in the last step of emulsion polymerization comprises at least one silane-containing olefinically unsaturated monomer. Accordingly, this means that in case of applying two monomer mixtures (MA) and (MB), meaning that two stages of polymerization take place and the resulting polymer has a core-shell structure, the monomer mixture (MB) in any case comprises a silane containing monomer. Also, in case of applying three monomer mixtures (MA), (MB) and (MC), meaning that three stages of polymerization take place and the resulting polymer has a seed-core-shell structure, the monomer mixture (MC) in any case comprises a silane containing monomer. Of course, also other monomer mixtures may (but not necessarily have to) comprise a silane containing monomer.

The silane containing olefinically unsaturated monomer, quite obviously, comprise both a silane functionality and an olefinically unsaturated function which serves for integrating the monomer and thus silane function into the polymer prepared during emulsion polymerization. Preferably, there es exactly one silane functionality and exactly one olefinically unsaturated function present. The olefinically unsaturated functions may be present in form of the already above described functions and moieties, i.e. as (meth)acrylate functions, allyl groups or vinyl groups. A silane or silane functionality, within the context of the present invention, is to be understood as a chemical group comprising a silicon atom covalently bound via a hydrolysable bond to an organic moiety. As a typical and also preferred example, Si-O bond is to be mentioned as hydrolysable bond. A typical and also preferred organic moiety then would be a methyl moiety, meaning that the silane containing monomer contains methoxy-silyl unit.

Basically, all conceivable monomers are applicable as long as the monomers comprise a group olefinically unsaturated function and at least one chemical group comprising a silicon atom covalently bound via a hydrolysable bond to an organic moiety.

Preferred silane containing olefinically unsaturated monomers are described by the following general formula (I)

[X-SiR¹ₐ(OR²)₃₋ₐ] (I)

wherein
- X: represents a group having an olefinically unsaturated group and being bound to the silicon via a carbon atom,
- R¹: represents, independently from each other, an alkyl, cycloalkyl, aryl, or aralkyl group, it being possible for the carbon chain to be interrupted by nonadjacent oxygen, sulfur, or NRₐ groups, where Rₐ is alkyl, cycloalkyl, aryl, or aralkyl;
- R²: represents hydrogen, an alkyl, or a cycloalkyl group, it being possible for the carbon chain to be interrupted by nonadjacent oxygen, sulfur or NRₐ groups, where Rₐ is alkyl, cycloalkyl, aryl, or aralkyl;
- a: is 0, 1 or 2, preferably 0 or 1, most preferred 0.

For group X, it is preferred that the carbon atom bound to the silicon is part of a linear alkylene group (-CₙH₂ₙ-) with n = 1 to 10, preferably 1-6, for example an ethylene (n=2) or propylene group (n=3). In a particularly preferred embodiment, n is 3. In this embodiment, at the opposite end of the alkylene group, then, a moiety comprising the olefinically unsaturated group is present. As a non-limiting example and as already mentioned above, the olefinically unsaturated group may be present in form of a (meth)acrylate function. As also known, such functions may be conveniently introduced via esterification reaction of (meth)acrylic acid with alcohols. Therefore, staying in the formal regime of the above-mentioned description of group X, at the opposite end of the alkylene group (-CₙH₂ₙ-) it is preferred that a (meth)acrylic function is linked via an ester group to the alkylene group (-(O=C)-O-CₙH₂ₙ-).

R¹ in formula (I) preferably represent, independently from each other, a C₁-C₁₀ alkyl group, preferably a C₁-C₆ alkyl group, very preferably a C₁ alkyl group (i.e. methyl).

Also, R² in formula (I) preferably represent, independently from each other, a C₁-C₁₀ alkyl group, preferably a C₁-C₆ alkyl group, very preferably a C₁ alkyl group.

In one specifically preferred embodiment of the present invention, the silane containing olefinically unsaturated monomer is 3-(trimethoxy-silyl)-propyl methacrylate, i.e. a compound having a structure of formula (I) above with X = methacryl-(O=C)-O-C₃H₆-, R² = alkyl and a = 0.

The amount of silane containing olefinically unsaturated monomer applied in the last step of emulsion polymerization, may be chosen according to individual needs. However, it may be advantageous that the amount is from 30 to 80 wt%, preferably from 40 to 75 wt%, based on the total amount of monomers of the mixture (M) applied in the last step of emulsion polymerization. Also, the amount of silane containing olefinically unsaturated monomer applied in the last step of emulsion polymerisation, based on the total amount of monomers applied for preparing the whole acrylic-based multi-stage emulsion polymer of dispersion (wD), preferably is from 7 to 18 wt%, preferably from 10 to 16 wt%.

Regarding the preferred embodiment of the multi-stage emulsion polymer of dispersion (wD) prepared via successive radical polymerization of three monomer mixtures (MA), (MB) and (MC), leading to a seed-core-shell structure type polymer, the following conditions may be chosen with preference.

Mixture (MA) preferably comprises at least 50 wt%, preferably at least 55 wt%, of olefinically unsaturated monomers having a water solubility of less than 0.5 g/l at 25°C. One such preferred monomer is styrene. The solubility of the monomers in water can be determined via establishment of equilibrium of the gas space above the aqueous phase (in analogy to the reference X.-S. Chai, Q.X. Hou, F.J. Schork, Journal of Applied Polymer Science Vol. 99, 1296-1301 (2006)).

For this purpose, in a 20 ml gas space sample tube, to a defined volume of water, preferably 2 ml, a mass of the respective monomer is added which is of a magnitude such that this mass can at any rate not be dissolved completely in the selected volume of water. Additionally, an emulsifier is added (10 ppm, based on total mass of the sample mixture). In order to obtain the equilibrium concentration, the mixture is shaken continually. The supernatant gas phase is replaced by inert gas, and so an equilibrium is established again. In the gas phase withdrawn, the fraction of the substance to be detected is measured (preferably by gas chromatography). The equilibrium concentration in water can be determined by plotting the fraction of the monomer in the gas phase. The slope of the curve changes from a virtually constant value (S1) to a significantly negative slope (S2) as soon as the excess monomer fraction has been removed from the mixture. The equilibrium concentration here is reached at the point of intersection of the straight line with the slope S1 and of the straight line with the slope S2. The determination described is carried out at 25°C.

The monomer mixture (MA) preferably contains no hydroxy-functional monomers. Likewise preferably, the monomer mixture (MA) contains no acid-functional monomers.

Very preferably the monomer mixture (MA) contains no monomers at all that have functional groups containing heteroatoms. This means that heteroatoms, if present, are present only in the form of bridging groups. This is the case, for example, for the monoolefinically unsaturated monomers described above that are (meth)acrylate-based and possess an alkyl radical as radical R.

The monomer mixture (MA) preferably comprises exclusively monoolefinically unsaturated monomers.

In one particularly preferred embodiment, the monomer mixture (MA) comprises at least one monounsaturated ester of (meth)acrylic acid with an alkyl radical and at least one monoolefinically unsaturated monomer containing vinyl groups, with a radical arranged on the vinyl group that is aromatic or that is mixed saturated aliphatic-aromatic, in which case the aliphatic fractions of the radical are alkyl groups.

The monomers present in the mixture (MA) are preferably selected such that a polymer prepared from them possesses a glass transition temperature of 10 to 65°C, preferably of 30 to 50°C.

The glass transition temperature Tg for the purposes of the invention is determined experimentally on the basis of DIN 51005 "Thermal Analysis (TA) - terms" and DIN 53765 "Thermal Analysis - Dynamic Scanning Calorimetry (DSC)". This involves weighing out a 15 mg sample into a sample boat and introducing it into a DSC instrument. After cooling to the start temperature, 1st and 2nd measurement runs are carried out with inert gas flushing (N2) of 50 ml/min with a heating rate of 10 K/min, with cooling to the start temperature again between the measurement runs. Measurement takes place customarily in the temperature range from about 50°C lower than the expected glass transition temperature to about 50°C higher than the glass transition temperature. The glass transition temperature for the purposes of the present invention, in accordance with DIN 53765, section 8.1, is that temperature in the 2nd measurement run at which half of the change in the specific heat capacity (0.5 delta cp) is reached. This temperature is determined from the DSC diagram (plot of the heat flow against the temperature). It is the temperature at the point of intersection of the midline between the extrapolated baselines, before and after the glass transition, with the measurement plot.

For a useful estimation of the glass transition temperature to be expected in the measurement, the known Fox equation can be employed. Since the Fox equation represents a good approximation, based on the glass transition temperatures of the homopolymers and their parts by weight, without incorporation of the molecular weight, it can be used as a guide to the skilled person in the synthesis, allowing a desired glass transition temperature to be set via a few goal-directed experiments.

As mentioned above, the preparation of a preferred polymer by means of three stages i., ii. and iii. and three monomer mixtures (MA), (MB) and (MC) may also be called a seed-core-shell polymer.

The polymer prepared in a stage i. by the emulsion polymerization of the monomer mixture (A), i.e. the seed, preferably possesses a particle size of 20 to 125 nm (measured by means of dynamic light scattering (photon correlation spectroscopy) according to DIN ISO 13321, the particle size for the purposes of the present invention referring to the measured average particle diameter (Z-average mean). The particle size can be measured in concrete terms using, for example, a "Malvern Nano S90" (from Malvern Instruments).

Mixture (MB) of the here described preferred embodiment comprises preferably at least one polyolefinically unsaturated monomer, preferably at least one diolefinically unsaturated monomer. One such preferred monomer is hexanediol diacrylate. By means of application of such least one polyolefinically unsaturated monomer, the polymer gains crosslinked character and thus microgel characteristics (for detailed explanations and microgels cf. below)

The monomer mixture (MB) preferably contains no hydroxy-functional monomers. Likewise preferably, the monomer mixture (MB) contains no acid-functional monomers.

Very preferably the monomer mixture (MB) contains no monomers at all with functional groups containing heteroatoms. This means that heteroatoms, if present, are present only in the form of bridging groups. This is the case, for example, in the above-described monoolefinically unsaturated monomers which are (meth)acrylate-based and possess an alkyl radical as radical R.

In one particularly preferred embodiment, the monomer mixture (MB), as well as the at least one polyolefinically unsaturated monomer, includes at any rate the following further monomers. First of all, at least one monounsaturated ester of (meth)acrylic acid with an alkyl radical, and secondly at least one monoolefinically unsaturated monomer containing vinyl groups and having a radical located on the vinyl group that is aromatic or that is a mixed saturated aliphatic-aromatic radical, in which case the aliphatic fractions of the radical are alkyl groups.

The fraction of polyunsaturated monomers is preferably from 0.05 to 3 mol%, based on the total molar amount of monomers in the monomer mixture (MB).

The monomers present in the mixture (MB) are selected such that a polymer prepared therefrom possesses a glass transition temperature of -35 to 15°C, preferably of -25 to +7°C.

The polymer prepared in the presence of the seed in stage ii. by the emulsion polymerization of the monomer mixture (MB) is also referred to as the core. After stage ii., then, the result is a polymer which comprises seed and core.

The polymer which is obtained after stage ii. preferably possesses a particle size of 80 to 280 nm, preferably 120 to 250 nm.

The monomer mixture (MC) preferably contains no hydroxy-functional monomers. Likewise, preferably, the monomer mixture (MB) contains no acid-functional monomers.

In one especially preferred embodiment, the monomer mixture (MC) comprises at least one at least one monounsaturated ester of (meth)acrylic acid having an alkyl radical and at least one silane-containing olefinically unsaturated monomer. Even more preferably, the monomer mixture (MC) consists of these two types of monomers.

The polymer prepared in the presence of seed and core in stage iii. by the emulsion polymerization of the monomer mixture (MC) is also referred to as the shell. The result after stage iii., then, is a polymer which comprises seed, core, and shell.

The fractions of the monomer mixtures are preferably harmonized with one another as follows. The fraction of the mixture (MA) is from 0.1 to 10 wt, the fraction of the mixture (MB) is from 60 to 80 wt%, and the fraction of the mixture (MC) is from 10 to 30 wt%, based in each case on the sum of the individual amounts of the mixtures (MA), (MB), and (MC).

Now, again referring to the acrylic-based multi stage emulsion polymer in general (and not only in terms of the preferred version prepared by the three monomer mixtures (MA), (MB) and (MC)), it can be said that following its preparation, the polymer possesses a particle size of 100 to 500 nm, preferably 125 to 400 nm, very preferably from 130 to 300 nm.

Furthermore, the olefinically unsaturated monomers of all mixtures (M) used for preparation of the acrylic-based multi-stage emulsion polymer are preferably selected such that the resulting polymer has an acid number of below 10, preferably below 5.

Also, the olefinically unsaturated monomers of all mixtures (M) used for preparation of the acrylic-based multi-stage emulsion polymer are preferably selected such that the resulting polymer has an OH number of below 10, preferably below 5.

All of the aforementioned acid numbers and OH numbers are values calculated on the basis of the monomer mixtures employed overall.

The aqueous dispersion (wD) preferably possesses a pH of 5.0 to 9.0, more preferably 7.0 to 8.5, very preferably 7.5 to 8.5. The pH may be kept constant during the preparation itself, through the use of bases as identified further on below, for example, or else may be set deliberately after the polymer has been prepared.

The measurement of the pH here is carried out preferably using a pH meter (for example, Mettler-Toledo S20 SevenEasy pH meter) having a combined pH electrode (for example, Mettler-Toledo InLab^{®} Routine).

The solids content of the dispersion (wD) is preferably from 15% to 40% and more preferably 20% to 30%.

The dispersion (wD) is aqueous. The expression "aqueous" is known to the skilled person and also and already explained above in connection with the aqueous pigment paste. The system involved comprises primarily water as solvent and comprises organic solvents only in minor proportions.

Hence it is preferably the case for the aqueous dispersion (wD) that it comprises a fraction of 55 to 75 wt%, especially preferably 60 to 70 wt%, based in each case on the total weight of the dispersion, of water.

It is further preferred for the percentage sum of the solids content of the dispersion (wD) and the fraction of water in the dispersion (wD) to be at least 80 wt%, preferably at least 90 wt%. Preferred in turn are ranges from 80 to 99 wt%, especially 90 to 97.5 wt%. In this figure, the solids content, which traditionally only possesses the unit "%", is reported in "weight %". Since the solids content ultimately also represents a percentage weight figure, this form of representation is justified. Where, for example, a dispersion has a solids content of 25% and a water content of 70 wt%, the above-defined percentage sum of the solids content and the fraction of water amounts to 95 wt%, therefore.

The dispersion accordingly consists very largely of water and of the specific polymer, and environmentally burdensome components, such as organic solvents in particular, are present only in minor proportions or not at all.

It is advantageous in accordance with the invention, moreover, if component B comprises the acrylic-based multi stage emulsion polymer of the dispersion (wD) in a total amount of 1 to 10 wt%, more particularly from 3 to 7 wt%, based in each case on the total weight of component B.

### Further constituents:

The at least one aqueous mixing clear resin component B may additionally comprise further customary resin binders, solvent and additives, for example of the kind also described in the context of the aqueous pigment paste A.

Preferably, the at least one aqueous mixing clear resin component B comprises at least one aqueous, acrylate-based microgel dispersion (b-1):
Microgel dispersions, also called latex in the prior art, are known fundamentally. It is a polymer dispersion in which, on the one hand, the polymer is present in the form of comparatively small particles, having particle sizes of 0.02 to 10 micrometres, for example ("micro"-gel). On the other hand, however, the polymer particles are at least partly intramolecularly crosslinked; the internal structure, therefore, equates to that of a typical polymeric three-dimensional network. Viewed macroscopically, a microgel dispersion of this kind continues to be a dispersion of polymer particles in a dispersion medium, water in particular.

The fraction of the crosslinked polymers can be ascertained following removal of water and any organic solvents, and subsequent extraction of the solid polymer. Crosslinking may be verified via the experimentally accessible gel fraction. It is necessary here to rule out a further increase in the gel fraction from crosslinking reactions subsequent to the isolation of the polymeric solid. The gel fraction is ultimately the fraction of the polymer in the dispersion that cannot be molecularly dispersedly dissolved, as an isolated solid, in a solvent. This insoluble fraction corresponds in turn to the fraction of the polymer that is present in the dispersion in the form of intramolecularly crosslinked particles or particle fractions.

The microgels for use in the context of the present invention are acrylate-based. They comprise or consist of corresponding copolymerized acrylate monomers. Besides the characteristic acrylate monomers, of course, such microgels may also include further monomers, which may likewise be incorporated by radical copolymerization into the polymer. Particularly preferred for use in the context of the present invention, however, are acrylate-based microgels prepared by exclusive use of acrylate monomers, especially (meth)acrylic acid and (meth)acrylates.

Fundamental methods for producing such microgels are known and are described in the prior art: The microgel dispersions (b-1) are prepared preferably via a radical emulsion polymerization, especially a single-stage radical emulsion polymerization, as described already in connection with the acrylic-based multi-stage emulsion polymer.

The acrylate-based microgel in the dispersion (b-1) has a glass transition temperature T_{g} of 50 to 60°C. The glass transition temperature is determined here using DIN 53765 "Thermal Analysis - Dynamic Scanning Calorimetry (DSC)", as described above.

As observed above, the acrylate-based microgel comprises crosslinked polymer particles. Such polymer particles have a gel fraction, by virtue of their crosslinking. Microgels used with preference are highly crosslinked and therefore have a high gel fraction. In one particularly preferred embodiment, therefore, the acrylate-based microgel dispersion has a gel fraction of 80% to 100%, preferably of 85% to 100% more preferably of 88% to 98%, more particularly of 90% to 98%, based in each case on the solids content of the dispersion. The gel fraction here may be determined gravimetrically (see section 14. of the description of the methods). The use of acrylate-based microgel dispersions having the above-recited gel fractions leads to improved surface hardness of the aqueous coating materials and multicoat paint systems produced from them.

The acrylate-based microgel dispersion preferably has a number-average particle size of 100 to 250 nm, more particularly of 120 to 250 nm. The number-average particle size may be determined, for example, by photon correlation spectroscopy (see description above).

An acrylate-based microgel dispersion used preferably in the context of the present invention is obtainable by radical emulsion polymerization, especially single-stage radical emulsion polymerization, of
- at least one first monomer (i) which has at least two alkenyl groups (also called polyolefinically unsaturated monomer), and
- at least one further, monoolefinically unsaturated monomer (ii).

The monomer (i) is preferably selected from the group of ethylene glycol dimethacrylate, tetraethylene glycol dimethacrylate, methylenebisacrylamide, methylbismethacrylamide, divinylbenzene, vinyl methacrylate, vinyl crotonate, divinylacetylene, trivinylbenzene, glycerol trimethacrylate, pentaerythritol tetramethacrylate, triallyl cyanurate, divinylethane, divinyl sulfide, divinyl sulfone, hexatriene, triethylene glycol dimethacrylate, diallylcyanamide, glycol diacrylate, ethylene glycol divinyl ether, diallyl phthalate, trimethylolpropane diallyl ether, divinyldimethylsilane, glycerol trivinyl ether, trimethylol propane triacrylate, trimethylolethane triacrylate, trimethylolpropane trimethacrylate, trimethylolethane trimethacrylate, tetramethylene glycol dimethacrylate, triethylene glycol dimethacrylate, tetraethylene glycol diacrylate, tetraethylene glycol dimethacrylate, pentaerythritol diacrylate, pentaerythritol triacrylate, pentraerythritol tetraacrylate, dipentaerythritol diacrylate, dipentaerythritol triacrylate, dipentaerythritol tetraacrylate, dipentaerythritol pentaacrylate, dipentaerythritol hexaacrylate, tripentaerythritol octoacrylate, pentaerythritol dimethacrylate, pentaerythritol trimethacrylate, dipentaerythritol dimethacrylate, dipentaerythritol tetramethacrylate, tripentaerythritol octamethacrylate, pentaerythritol diitaconate, dipentaerythritol trisitaconate, dipentaerythritol pentaitaconate, dipentaerythritol hexaitaconate, 1,3-butanediol diacrylate, 1,3-butanediol dimethacrylate, 1,4-butanediol diitaconate, sorbitol triacrylate, sorbitol tetraacrylate, sorbitol tetramethacrylate, sorbitol pentaacrylate, sorbitol hexaacrylate, modified 1,4-butylene diacrylate, 1,6-hexanediol diacrylate, modified trimethylolpropane triacrylate, modified pentaerythritol triacrylate, methylated epoxy resin, and mixtures thereof. Particular preference is given to using 1,6-hexanediol diacrylate as monomer (i). The use of the monomers (i) leads to crosslinking of the resultant polymers. Such polymers therefore have a microgel fraction, with the microgel fraction being dependent on the amount of crosslinking agent and/or monomer (i) used. The amount of the monomer (i) is preferably 50 to 80 wt%, more particularly 60 to 70 wt%, based on the total weight of the monomers (i) and (ii).

The monomer (ii) is monoolefinically unsaturated and therefore has only one alkenyl group. Preference is given to using a mixture of two different monomers (ii), with one monomer having a hydroxyl, carboxylamide or epoxy group and the other monomer being a C₁-C₄ alkyl ester of (meth)acrylic acid or a vinylaromatic monomer. Monomers which contain hydroxyl, carboxylamide or epoxy groups are selected for example from the group of (meth)acrylic acid, hydroxyethyl (meth)acrylate, and hydroxypropyl (meth)acrylate. C₁-C₄ alkyl esters of (meth)acrylic acid are, in particular, methyl, ethyl, propyl or butyl (meth)acrylate. Suitable vinylaromatic compounds are styrene or alpha-methylstyrene. Particular preference is given to using as monomer (ii) a mixture of 10 to 90 wt% of hydroxypropyl (meth)acrylate and 10 to 90 wt% of methyl (meth)acrylate, the weight figures being based on the total weight of the monomers (i) and (ii).

The preferably single-stage emulsion polymerization is carried out in water using initiators and emulsifiers that are known to the skilled person. Suitable emulsifiers and initiators are described for example in the laid-open specification US 4 598 111 A.

More preferably the acrylate-based microgel dispersion (b-1) is obtainable by radical, especially single-stage radical, emulsion polymerization of - based on the total weight of the monomers (i) and (ii) -
(i) 60 to 70 wt% of a first monomer containing at least two alkenyl groups, more particularly 1,6-hexanediol diacrylate, and
(ii)a mixture of 10 to 90 wt% of C₁-C₁₀ hydroxyalkyl (meth)acrylate, especially hydroxypropyl methacrylate, and 10 to 90 wt% of C₁-C₁₀ alkyl (meth)acrylate, more particularly methyl methacrylate.

The pigment-free component B comprises the acrylate-based microgel dispersion (b-1), preferably in a certain total amount. The pigment-free component B preferably comprises the acrylate-based microgel dispersion (b-1) in a total amount of 1 to 15 wt%, preferably of 5 to 12 wt%, more particularly of 6 to 9 wt%, based in each case on the total weight of the pigment-free component B. The use of the acrylate-based microgel dispersion (b-1) in the above-recited total amounts leads to good mechanical properties. In particular, the surface hardness of the aqueous coating material can be increased when using the acrylate-based microgel dispersion (b-1).

According to one particularly preferred embodiment of the present invention, the pigment-free component B comprises not only the above-described aqueous dispersions (wD) and (b-1), but also at least one anionically stabilized binder (b-2).

### Anionically stabilized binder (b-2):

Suitable anionically stabilized binders (b-2) are selected from the group of anionically stabilized polyurethanes and anionically stabilized polyurethane-poly(meth)acrylate hybrid polymers, and mixtures thereof.

To achieve the above-described low VOC content of the pigment-free component B, particular preference is given to using anionically stabilized binders (b-2) in the form of aqueous dispersions of anionically stabilized polymers. More preferably the anionically stabilized binder used in the component B is the same binder as in the aqueous pigment paste A, in other words the above-described aqueous anionically stabilized polyurethane polymer dispersion.

It is preferred in accordance with the invention, furthermore, if the component B comprises a further anionically stabilized binder, more particularly an aqueous dispersion of an anionically stabilized polyurethane-poly(meth)acrylate hybrid polymer. In one particularly preferred embodiment, therefore, anionically stabilized binder (b-2) in the pigment-free component B comprises a mixture of the anionically stabilized polyurethane polymer (b-2a) in dispersion in water, described above in connection with the pigment paste A and of the anionically stabilized polyurethane-poly(meth)acrylate hybrid polymer (b-2c) in dispersion in water, described below.

Preferably, the aqueous dispersion of an anionically stabilized polyurethane-poly(meth)acrylate hybrid polymer (b-2c) is in a form, where the hybrid polymer is obtainable by a radical reaction of
(i) a nonionic polyurethane polymer having a number-average molecular weight of 1000 to 30 000 Da, more particularly 1500 to 20 000 Da, and on average per molecule 0.05 to 1.1, more particularly 0.2 to 0.9, polymerizable double bonds, with
(ii) at least one ethylenically unsaturated monomer having at least one carboxylic acid in the presence of at least one water-insoluble initiator,
where the weight ratio between nonionic polyurethane polymer and the at least one ethylenically unsaturated monomer is from 1 : 10 to 10 : 1.

The nonionic polyurethane polymer is preferably obtainable by reaction of
(a) a polyester polyol having a number-average molecular weight of 400 to 5000 Da,
(b) at least one polyisocyanate optionally together with at least one monoisocyanate,
(c) at least one compound which as well as a monoolefinically unsaturated group comprises at least one group that is reactive toward NCO groups, and
(d) at least one organic compound containing hydroxyl and/or amino groups and having a molecular weight of 60 to 399 Da.

The nonionic polyurethane polymer is preferably prepared by first preparing an NCO prepolymer from (a) to (d), and then further reacting it in equimolar amounts, relative to the NCO groups, with the component (d). The reaction of the components (a) to (d) may also be carried out in the presence of catalysts, such as dibutyltin dilaurate, dibutyltin maleate, and tertiary amines, for example.

The amounts of (a) to (d) to be used are evident from the target number-average molecular weight Mₙ. The olefinically unsaturated groups are preferably acrylate, methacrylate or allyl ether groups, more particularly allyl ether groups.

Suitable polyester diols (a) and also polyisocyanates (b) are the compounds described in connection with the anionically stabilized polyurethane polymer (a-2).

Particular preference is given to using compounds (c) which as well as a monoolefinically unsaturated group, especially allyl ether group, further comprise two groups that are reactive toward NCO groups. Examples of groups that are reactive toward NCO groups include -OH, -SH, >NH and -NH₂ groups, preferably -OH groups. Use may be made, for example, of 2,3-dihydroxypropyl monoallyl ether, allyl 2,3-dihydroxypropanoate, glycerol monoallyl ether, pentaerythritol monoallyl ether, pentaeythritol diallyl ether, trimethylolpropane monoallyl ether, and trimethylolpropane diallyl ether. Particularly preferred for use is trimethylolpropane monoallyl ether. It is preferred for the compound (c) to be incorporated in an in-chain position (not terminally) into the nonionic polyurethane polymer.

Component (d) used preferably comprises diamines and/or polyamines having primary and/or secondary amino groups, and also diols of the formula (1) above. Preference is given to using diamines and also diols of the formula (1) above. Diamines include hydrazine, ethylenediamine, propylenediamine, 1,4-butylenediamine, piperazine, 1,4-cyclohexyldimethylamine, hexamethylene-1,6-diamine, trimethylhexamethylenediamine, menthanediamine, isophoronediamine, diethanolamine, and aminoethylethanolamine. Particular preference is given to using diethanolamine.

The hybrid polymer is obtainable by radically polymerizing an ethylenically unsaturated monomer or a mixture of ethylenically unsaturated monomers in the presence of the nonionic polyurethane, using a water-insoluble initiator or a mixture of water-insoluble initiators, the weight ratio between the nonionic polyurethane polymer and the ethylenically unsaturated monomer or mixture of ethylenically unsaturated monomers being between 1 : 10 and 10: 1, preferably between 1 : 2 and 2: 1.

Ethylenically unsaturated monomers used are preferably as follows:
(i) aliphatic esters of (meth)acrylic acid containing neither hydroxyl nor carboxyl groups, more particularly methyl, ethyl, propyl, butyl, hexyl, ethylhexyl, stearyl, and lauryl acrylate and methacrylate or mixtures of these monomers,
(ii) ethylenically unsaturated monomers carrying at least one carboxyl group in the molecule, more particularly acrylic acid, methacrylic acid, ethacrylic acid, crotonic acid, maleic acid, fumaric acid, and itaconic acid,
(iii) and also mixtures of components (i) and (ii).

Ethylenically unsaturated monomers used are preferably mixtures consisting of 40 to 95, preferably 85 to 95 wt% of component (i) and 5 to 60 wt%, preferably 5 to 15 wt%, of component (ii), the sum of the weight fractions of (i) and (ii) always making 100 wt%.

Water-insoluble initiators used may be, for example, water-insoluble azocompounds and water-insoluble peroxy compounds. Examples of water-insoluble peroxy compounds are tert-amyl peroxy-2-ethylhexanoate, tert-butyl peroxy-2-ethylhexanoate, di-tert-butylperoxide, dilauryl peroxide, dibenzoyl peroxide, and 1,1-dimethyl-3-hydroxybut-(1)-yl peroxyethylhexanoate.

In preferred embodiments of component B, anionically stabilized polyurethane polymer (b-2a) and the anionically stabilized polyurethane-poly(meth)acrylate hybrid polymer (b-2c) are present in certain quantity ranges. It is therefore advantageous in accordance with the invention if component B comprises the anionically stabilized polyurethane polymer (b-2a), in dispersion in water, in a total amount of 1 to 15 wt%, more particularly of 6 to 10 wt%, based in each case on the total weight of component B. It is advantageous in accordance with the invention, furthermore, if the pigment-free component B comprises the anionically stabilized polyurethane-poly(meth)acrylate hybrid polymer (b-2c), in dispersion in water, in a total amount of 1 to 15 wt%, more particularly of 6 to 10 wt%, based in each case on the total weight of component B.

Component B comprises the aqueous, acrylate-based microgel dispersion (b-1), the above-described anionically stabilized binder (b-2) and the acrylic-based multi-stage emulsion polymer of the aqueous dispersion (wD) preferably in a certain total amount. The respective total amount preferably is from 10 to 35 wt%, preferably from 15 to 30 wt%, based in each case on the total weight of component B. The above-recited total amounts lead to a high mechanical stability, especially to a good adhesion on the original finish, and also to a high condensation resistance and stonechip adhesion, of the aqueous coating materials produced. Furthermore, good hiding is achieved.

Component B likewise preferably has a VOC content of less than or equal to 250 g/L. In order to achieve this VOC content, the amount of organic solvents in the pigment-free component B ought to be extremely low. In one particularly preferred embodiment of the first subject of the invention, therefore, the at least one component B comprises organic solvent in a total amount of 0 to 8 wt%, preferably of 0 to 7.9 wt%, more particularly of 0 to 7.7 wt%, based in each case on the total weight of component B. The term "organic solvent" refers to volatile compounds which at 20°C have a vapor pressure of more than 10 pascals and/or which possess an initial boiling point of less than or equal to 250°C at a standard pressure of 101.3 kPa. Through the use of not more than 8 wt% of organic solvents in the pigment-free component B, it is possible to achieve a VOC content of less than or equal to 250 g/L.

Component B is preferably also an aqueous composition. Component B therefore preferably has a water content of 20 to 90 wt%, more particularly 30 to 85 wt%, very preferably 50 to 70 wt%, based in each case on the total weight of component B.

### Further constituents:

The at least one pigment-free component B may additionally comprise further customary additives, of the kind also described in the context of the aqueous pigment paste A.

The pigment-free component B is generally prepared by initially introducing the binder polymers into a mixing units and mixing them with all of the further constituents, while stirring. The dispersion is subsequently filtered.

In accordance with the invention the aqueous pigment paste A and the mixing clear resin component B have a VOC content of less than or equal to 250 g/L, each. More preferably the aqueous pigment paste A and component B have a VOC content of 100 to 250 g/L, each. This ensures that the mixer system likewise has a VOC content of less than or equal to 250 g/L. In this way, the amount of organic solvents released during the application of the mixer system is significantly lowered and hence the environmental burden as well is greatly reduced, though without detrimental effect on the shade accuracy, the hiding, and the mechanical properties.

### Component (C):

As well as the above-recited components A and B, the mixer system may also comprise further components. With particular preference the mixer system further comprises a component C which controls the rheology of the aqueous coating material. It is therefore particularly advantageous in accordance with the invention if the mixer system further comprises a component C, with the component C comprising at least one thickener and also 90 to 98 wt% of water, based on the total weight of the component C.

Suitable thickeners are inorganic thickeners from the group of the phyllosilicates, such as lithium aluminum magnesium silicates. Use may likewise be made of an organic thickener, as for example a (meth)acrylic acid-(meth)acrylate copolymer thickener or a polyurethane thickener, such as the known associative polyurethane thickeners, for example. Associative thickeners are water-soluble polymers which have strongly hydrophobic groups at the chain ends or in sidechains, and/or whose hydrophilic chains contain hydrophobic blocks or concentrations in their interior. As a result, these polymers possess a surfactant character and are capable of forming micelles in aqueous phase. In similarity with the surfactants, the hydrophilic regions remain in the aqueous phase, while the hydrophobic regions enter into the particles of polymer dispersions, adsorb on the surface of other solid particles such as pigments and/or fillers, and/or form micelles in the aqueous phase. Ultimately a thickening effect is achieved, without any increase in sedimentation behavior. Particularly preferred thickeners in the context of the present invention are phyllosilicates, especially lithium aluminum silicates.

The aforementioned thickeners, especially the lithium aluminum phyllosilicates, are present in component C in a total amount of 0.1 to 5.0 wt%, preferably 0.2 to 3.0 wt%, in particular 0.3 to 2.0 wt%, based in each case on the total weight of component C.

### Component (D):

Furthermore, the mixer system may comprise not only the above-described components A, B and C but also a further component D. This component D is an aqueous pigment paste which comprises at least one effect pigment and also at least one anionically stabilized binder and/or at least one nonionically stabilized binder. Unlike component A, component D comprises no color pigments, and the fraction of color pigments in component D is therefore 0 wt%, based on the total weight of component D. More preferably the component D comprises at least one effect pigment, at least one anionically stabilized binder, and at least one nonionically stabilized binder. An especially preferred embodiment of component D comprises - based in each case on the total weight of component D -
- 5% to 35% of at least one effect pigment,
- 5 to 30 wt% of an anionically stabilized binder,
- 0.1 to 12 wt% of a nonionically stabilized binder.

Effect pigments, anionically and nonionically stabilized binders included are those effect pigments, anionically stabilized binders (a-2), and nonionically stabilized binders (a-3) described in connection with component A.

In the context of the present invention it is particularly preferred if the mixer system comprises at least 1 to 100 components D.

### Component (E):

Furthermore, the mixer system of the invention may comprise a pigment-free component E, which is different from component B.

In the context of the present invention, the mixer system may comprise at least 1 to 3 components E.

### Component (F):

Furthermore, the mixer system may comprise at least one crosslinker component F comprising at least one crosslinking agent. Examples of such crosslinking agents are amino resins, polyisocyanates, and also blocked polyisocyanates, as described in the laid-open specification EP 0 614 951 A2. As well as the crosslinking agent, binders may be present. The same binders as in the pigment-free component B are preferably present. However, the potential presence of component (F) does not exclude that other components, e.g. the mixing clear resin component B, may comprise respective crosslinking components. For, example, if appropriate, component B may comprise typical crosslinkers of one component coating materials like for example melamine resins and blocked polyisocyanates.

With particular preference the components C, D, E and F likewise each have a VOC content of 0 to 250 g/L, more particularly of 100 to 250 g/L.

A preferred embodiment of the mixer system of the invention is a mixer system in which all pigment pastes A and optionally D comprise the same binder or - in the case of a binder mixture - the same binders. This ensures high miscibility and also high compatibility of the components of the mixer system.

Particularly preferred mixer systems of the present invention comprise the following components:
(a) at least one, especially 1 to 100, above-described aqueous pigment paste(s) A,
(b) at least one above-described pigment-free component B,
(c) at least one above-described component C,
(d) at least one, especially 1 to 100, above-described aqueous pigment paste(s) D,
(e) optionally at least one above-described pigment-free component E, and
(f) optionally at least one above-described crosslinker component F.

To produce the aqueous coating material, depending on the desired shade of the aqueous coating material, one or more components (A) of the mixer system are then mixed with at least one component (B), optionally at least one component (C), and optionally one or more components (D) and (F), directly before the application of the aqueous coating material. However, the above does not exclude that respective components are mixed to produce an aqueous coating material, which then is filled, packaged and transported/delivered to, for example, respective customers like OEM customers. Also, it is possible to mix and fill/deliver part of the components like described in the presentence and also to fill/deliver the residual part of components respectively. For example, in case of two component coating materials, it quite obviously is meaningful and required to separately fill/deliver a crosslinker component F, while mixing all residual components and delivering this mixture separately.

The second subject of the present invention therefore relates to a method for producing aqueous coating materials having a VOC content of 0 to 250 g/L, more particularly of 100 to 250 g/L, by mixing at least two aqueous components, wherein a mixer system of the invention is used and the aqueous coating materials are produced by mixing the pigment paste A and the mixing clear resin component B and optionally further components like a component C.

For example, the various aqueous pigment pastes A and optionally D are mixed in a ratio such as to result in the desired shade. The mixing ratio of the component A and optionally D with the component or various components B is determined by the requirement for the resulting coating material, independently of the shade, to have the desired viscosity, the desired solids content, and the desired amount of organic solvents, etc. Furthermore, the mixing ratio is determined by the required technological properties - the adhesion, for example.

The aqueous coating materials produced from the mixer system of the invention preferably have a VOC content of 0 to 250 g/L, more particularly of 100 to 250 g/L. In one particularly preferred embodiment of the second subject of the invention, therefore, the aqueous coating material comprises organic solvents in a total amount of 0 to 7 wt%, more particularly of 0 to 6 wt%, based in each case on the total weight of the coating materials. The definition of the organic solvents is subject to the statements made above for components A and B.

The aqueous coating materials produced from the mixer system of the invention have excellent shade accuracy, good hiding and good mechanical properties, especially good adhesion to the original finish, and also a high condensation resistance and stonechip adhesion.

The present invention also relates to a process of producing a coating layer on a substrate comprising the application of a beforementioned aqueous coating material to a substrate and subsequent curing of the applied coating material. This process, in particular, also involves production of more than one layer, e.g. at least two layers, whereby one of them is a layer produced from the coating material described above and one of them is a layer produced from a clearcoat material.

Thus, the aqueous coating materials produced using the mixer system of the invention may be applied to a wide variety of different substrates, such as metal, wood, plastic or paper, for example. The aqueous coating materials produced by means of the mixer system of the invention are especially suitable for the refinishing of damaged sites, especially for automotive refinish. The coating materials in this case are applied, directly after their production by mixing of components (A) and (B) and also, optionally, of further components (C), (D) and (F), to the appropriately prepared damaged site (e.g., by sanding and filling), by means of customary methods, especially spraying. It is particularly preferred in this context if no flashing takes place between the multiple application of the aqueous coating materials. The aqueous coating materials produced using the mixer system of the invention are preferably used in order to produce a basecoat. While, as said, refinishing processes are a field for which the coating material is particularly suitable, this does not exclude the possibility of original coating applications, for example automotive OEM processes.

After initial drying of the basecoat thus produced, at room temperature, or by forced drying (for example, 10 min. at 60°C or IR drying), a suitable transparent topcoating composition (also called clearcoat material) preferably is applied. Suitability as topcoat material is possessed both by organically dissolved and by aqueous one- or two-component clearcoat materials, and also powder clearcoat materials. Frequently employed are two-component clearcoat materials based on a hydroxyl-group-containing acrylate copolymer and a polyisocyanate. Such clearcoat materials are described in patent applications DE 34 12 534, DE 36 09 519, DE 37 31 652, and DE 38 23 005, for example. Suitable one-component clearcoat materials, based for example on a hydroxyl-group-containing binder and an amino resin curing agent, are likewise known and are described, for example, in Kittel, Lehrbuch der Lacke und Beschichtungen, volume IV; W.A. Colomb in der H. Heeremann GmbH, Berlin-Oberschwandorf 1976. Also, silane-based clearcoat materials (i.e. clearcoat materials that cure via hydrolyzation and condensation of hydrolysable silane functions (in particular alkoxysilane functions)) are of preference. Of course, however, all other clearcoat materials, not explicitly stated here, are suitable.

After any required flash-off time of around 5 minutes, the basecoat is then dried (also named cured) together with the topcoat. When using two-component clearcoat materials, the drying takes place generally at temperatures of below 100°C, preferably at below 80°C or even below 60°C. In a particularly preferred embodiment, the curing takes place as below 40°C, for example at room temperature. The dry film thicknesses of the basecoat are in general between 5 and 25 µm, those of the topcoat in general between 30 and 70 µm.

The above stated curing conditions (also named low bake or low cure conditions) are also applicable with regard to one-component silane-based clearcoat materials, i.e. clearcoat materials which cure via hydrolyzation and condensation of hydrolysable silane functions (in particular alkoxysilane functions). The big advantage of such clearcoat materials is that they are producible and also applicable as one-component materials but are still curable under low bake conditions due to their curing mechanism via hydrolyzation and condensation of hydrolysable silane functions. For this, however, it is important to prepare the clearcoat material by strict exclusion of any water and traces of water, but allow such contact with water only after/during application and initial film formation (as the water initiates hydrolyzation of the silane functions and thus the curing).

When using standard one-component clearcoat materials, the basecoat is dried together with the topcoat at elevated temperatures, of around 120°C, for example. The dry film thicknesses of the topcoat in this case are in general between 30 and 50 µm.

However, as the coating material prepared by the mixing system of the invention is particularly suitable to be cured at low temperatures (which are preferred in refinish applications and also generally from an economic and ecological perspective) and still results in coating layers and build-ups and also multicoat layer systems with remarkable technological properties, in particular excellent adhesion and interlayer adhesion, the low-bake area is of preference.

Regarding further embodiments of the method of the invention, especially regarding the components used for producing the aqueous coating materials, the statements made in relation to the mixer system of the invention are valid mutatis mutandis.

Finally, a subject of the present invention is the use of a mixer system of the invention for producing aqueous coating materials for refinishing and/or for the coating of automobile bodies and/or plastics parts.

Regarding further embodiments of the use in accordance with the invention, especially regarding the mixer system used, the statements made in relation to the mixer system of the invention and also the method of the invention are valid mutatis mutandis.

### Examples

### Description of methods:

### 1. Solids content (solids, nonvolatile fraction)

The nonvolatile fraction is determined in accordance with DIN EN ISO 3251 (date: June 2008). This determination is accomplished by weighing out 1 g of sample into an aluminum dish dried beforehand and carrying out drying in a drying oven at 110°C for 60 minutes, followed by cooling in a desiccator, and then by reweighing. The residue, relative to the total amount of the sample employed, corresponds to the nonvolatile fraction. The volume of the nonvolatile fraction may be determined, if necessary, in accordance optionally with DIN 53219 (date: August 2009).

### 2. Determining the amount of free NCO groups

The amount of free isocyanate groups, also referred to below as NCO content, is determined by adding an excess of a 2% strength N,N-dibutylamine solution in xylene to a homogeneous solution of the samples in acetone/N-ethylpyrrolidone (1:1 vol%), by potentiometric back-titration of the amine excess with 0.1 N hydrochloric acid, in accordance with DIN EN ISO 3251, DIN EN ISO 11909, and DIN EN ISO 14896. The NCO content of the polymer, based on solids, can be calculated back via the fraction of a polymer (solids content) in solution.

### 3. Determination of acid number

The acid number is determined in accordance with DIN EN ISO 2114 (date: June 2002), using "method A". The acid number corresponds to the mass of potassium hydroxide in mg which is needed to neutralize 1 g of sample under the conditions specified in DIN EN ISO 2114. The stated acid number corresponds to the total acid number stated in the DIN standard, based on the solids content.

### 4. Determining the OH number

The OH number is determined in accordance with DIN 53240-2 (date: November 2007). In this method, the OH groups are reacted by acetylation with an excess of acetic anhydride. The excess acetic anhydride is subsequently cleaved by addition of water to form acetic acid, and the entire acetic acid is back-titrated with ethanolic KOH. The OH number indicates the amount of KOH in mg which is equivalent to the amount of acetic acid bound in the acetylation of 1 g of sample, and is based here on the solids content.

### 5. Determining the number-average and weight-average molecular weights

The number-average molecular weight (Mₙ) is determined by means of gel permeation chromatography (GPC) in accordance with DIN 55672-1 (date:. August 2007). Besides the number-average molecular weight, this method may also be used to determine the weight-average molecular weight (M_{w}) and also the polydispersity d (ratio of weight-average molecular weight (M_{w}) to number-average molecular weight (Mₙ)). Tetrahydrofuran is used as eluent. The determination is made against polymethyl methacrylate standards. The column material consists of styrene-divinylbenzene copolymers.

### 6. Production of multicoat systems

To assess the properties of aqueous coating materials obtained using the mixer system of the invention as well as comparative mixer systems, multicoat paint systems are produced according to the following general protocol:
A steel panel coated with a standard black electrocoat (CathoGuard^{®} 580 Schwarz from BASF Coatings), and then padded (manual ruffling of the substrate using a 3M^{™} Scotch-Brite^{™} abrasive cloth), and subsequently cleaned with a cleaning composition (Glasurit^{®} 700-1). First of all, using a spray gun (SATAjet^{®} HVLP 4000, entry pressure: 2 bar, pressure at the nozzle: 0.7 bar) a commercial primer-surfacer (Glasurit^{®} 285-270 Grundfüller Pro, Glasurit^{®} 929-58 Füllerhärter Pro and Glasurit^{®} 352-91 Einstellzusatz in a volume ratio of 5:1 :1) is applied in two spray passes and then dried at 60°C for 30 minutes; the resulting dry film thickness is to be 60 µm.

After initial sanding by means of an eccentric sander (adhesive sanding sheets 150 mm P 500) and subsequent cleaning with a cleaning composition (Glasurit^{®} 700-1), the respective aqueous coating material (coating material E and C1 to C3, cf. item 5. below) is applied with a spray gun (SATAjet^{®} HVLP 4000, entry pressure: 2 bar, pressure at the nozzle: 0.7 bar) in two spray passes without flashing in between (i.e., wet-on-wet application) and subsequently flashed off until the surface was touch dry. The resulting total dry film thickness of the respective coating composition is to be 10 to 20 µm. Subsequently, in two spray passes, the application takes place of a first two-component silane-based clearcoat material with a target dry film thickness of 50-60 µm. Drying is carried out at room temperature (25°C) 60°C for 30 minutes.

Furthermore, the above procedure was once more conducted via application of coating materials C3 and C4. Again, a (second) two-component silane-based clearcoat material was applied (however, having a varied backbone of the silane building block).

### 7. Determination of the dry film thicknesses

The film thicknesses are determined in accordance with DIN EN ISO 2808 (date: May 2007), Method 12A, using the MiniTest^{®} 3100 - 4100 instrument from ElektroPhysik.

### 8. Determination of the VOC content

The VOC content of the aqueous refinish compositions is determined according to DIN ISO 11890-1 or DIN ISO 11890-2 (September 2009).

### 9. Determination of the gel fraction of the aqueous microgel

The gel fraction can be determined gravimetrically by freeze-drying the dispersion, determining the total mass of the freeze-dried polymer, and then extracting the polymer for 24 hours at 25°C in an excess of tetrahydrofuran (ratio of tetrahydrofuran to freeze-dried polymer = 300: 1). The insoluble fraction is removed and dried in an air circulation oven at 50°C for four hours. Thereafter, the dried, insoluble fraction is weighed, and the quotient is formed with the total mass of the freeze-dried polymer. The value obtained corresponds to the gel fraction.

### Illustrative embodiments

The inventive and comparative examples below serve to illustrate the invention but must not be interpreted as imposing any restriction.

Unless indicated otherwise, the amounts in parts are parts by weight, and the amounts in percent are percentages by weight, in each case.

### 1. Preparation of the binders for components A and B

### 1.1 Preparation of the anionically stabilized polyurethane polymer in aqueous dispersion [(a-2) and (b-2a)]

### 1.1.1 Preparation of the polyester resin PE1

55 wt% of a commercial dimer fatty acid (iodine number of 10 mg I₂/g, monomer content of max. 0.1%, trimer content of not more than 2%, acid number of 195 to 200 mg KOH/g, saponification number of 197 to 202 mg KOH/g), 30 wt% of 1,6-hexanediol and 15 wt% of isophthalic acid are condensed with addition of cyclohexane as azeotrope former to an acid number (determined relative to nonvolatile fraction) of 3 to 4 mg KOH/g. Any cyclohexane present is removed under reduced pressure and the polyester is diluted with methyl ethyl ketone to a solids content of 73%. The resulting polyester resin PE1 has an OH number (solids) of 71 to 75 mg KOH/g and also a calculated molecular weight of 1400 D.

### 1.1.2 Preparation of the anionically stabilized polyurethane polymer in aqueous dispersion in water [(a-2) and (b-2a)]

Under nitrogen as inert gas atmosphere, 4.36 parts of dimethylolpropionic acid, 23.5 parts of dicyclohexylmethane 4,4'-diisocyanate, 0.9 part of neopentyl glycol and 48.75 parts of the polyester PE1 are combined. Following addition of methyl ethyl ketone, the mixture is reacted with stirring (at a solids content of 67 ±1%) at 80 - 82°C. The reaction is monitored by determination of the isocyanate content of the solution. When a constant value is reached for the isocyanate content, of 1.0% to 1.2% (based on solution), trimethylolpropane (TMP) is added for chain extension, in an NCO: TMP ratio of 1: 1.1, the prepolymer is reacted to give an OH-functional polyurethane polymer having an arithmetic OH number of 17 mg KOH/g (based on resin solids). The polymer is then neutralized to an extent of 70% with N,N'-dimethylethanolamine, and dispersed by addition of water and of a polypropylene glycol having an average molar mass of 900 D. The methyl ethyl ketone is then removed by distillation The anionic polyurethane polymer dispersion thus obtained has a solids content of 29% - 31% and a pH of 7.7 and contains 20% of polypropylene glycol, based on the polyurethane polymer content.

### 1.2 Preparation of the nonionically stabilized acrylate polymer in aqueous dispersion [(a-3)]

A stirred tank equipped with two separate feed lines, anchor stirrer and thermometer is charged with a mixture of butyl glycol and water (1:1). The stirred tank is subsequently subjected to nitrogen with an absolute pressure of 2.5 bar. With continuing stirring, a mixture of 3.7 parts of butyl glycol and 6.4 parts of tert-butyl peroxy-2-ethylhexanoate is metered in via a feed line over 4 hours and 45 minutes. Via the second feed, a mixture of 26 parts of methacrylic ester of methoxypolyethylene glycol having an average molar mass of 2000 D in the form of a 50% strength aqueous solution (e.g., BisomerS20W^{®} from GEO Speciality Chemicals), 8.55 parts of styrene, 4.7 parts of n-butyl acrylate, 8.34 parts of N-(2-methacryloyloxyethyl)ethyleneurea in the form of 50% strength aqueous solution, 3.36 parts of methyl methacrylate, 0.84 part of N,N'-dimethylaminopropylmethacrylamide, 6.5 parts of hydroxyethyl methacrylate and 18.5 parts of butyl glycol is metered over 4 hours and 30 minutes, with the second feed starting 15 minutes after the beginning of the first feed.

After a postpolymerization phase of 60 minutes, butyl glycol is used to set a water: Butyl glycol ratio = 45:55 at a solids content of 45% ± 1%. The acid number of the resin is 4.0 to 6.0 mg KOH/g, based on the solids content.

### 1.3 Preparation of an aqueous, acrylate-based microgel dispersion [(b-1)]

A reaction vessel equipped with stirrer, thermometer, two feeds and a reflux condenser is charged under nitrogen with 50.73 parts of water and 0.6 part of Aerosol MA 80 surfactant. The monomer feed vessel is filled with 0.25 part of Aerosol MA 80 surfactant, 0.6 part of Aerosol EF 800 surfactant, 603 parts of hexanediol diacrylate, 12.605 parts of methyl methacrylate, 2.105 parts of hydroxypropylmethacrylate, and 0.151 part of deionized water.

The initiator feed vessel is filled with 7.5 parts of deionized water containing, in solution, 0.255 part of ammonium peroxydisulfate.

At a reactor temperature of 83°C, 10-% of the initiator feed is metered in over 10 minutes, and then the reactor is maintained at 83°C for a further 15 minutes. Then the feed of the monomer mixture and of the initiator mixture is commenced simultaneously; the monomer mixture is metered in over 180 minutes and the initiator solution over 210 minutes. Thereafter the monomer feed vessel is rinsed with 0.5 part of deionized water and the initiator feed vessel with 0.37 part of deionized water. The rinsing quantities are passed into the reaction mixture. The 83°C are maintained for 60 minutes more, and then the polymer dispersion is discharged and the reactor is rinsed with 0.628 part of deionized water, with the rinsing quantity likewise being passed to the polymer dispersion. The dispersion is subsequently filtered with a filter bag of 5 µm. The result is a white dispersion having a solids content of 22 ± 1%, measured at 110°C for 60 minutes. The number-average particle size is 130 to 230 nm.

### 1.4a Preparation of an aqueous dispersion (wD) comprising an acrylic-based multi-stage emulsion polymer to be applied according to the invention

The following protocol, in terms of the positions, also references to Table 1 below.

### Stage i.

A seed polymer is prepared separately. Position 1 (DI water) is charged to a reaction vessel with position 2 (EF 800). A mixture of position 3 (DI water) with 4 (EF800), 5 (styrene) and 6 (butyl acrylate) is mixed in a separate vessel and added as a feed at 80°C over the course of 40 minutes. An initiator solution of position 8 (APS) in position 7 (DI water) is added in parallel. Stirring is continued for 1h at 60°C and the resulting dispersion is used as seed in further polymerizations.

### Stage ii.

A 5L steel reactor equipped with a two-feed addition system, a reflux condenser and an anchor stirrer, is charged with position 9 (DI water) and the seed polymer from stage i. The mixture is heated to 80°C. The components in table A indicated as "Mono1" are premixed in a separate vessel. This mixture is added dropwise to the reactor over the course of 2 hours, with the fraction of the monomers in the reaction solution, based on the total amount of monomers used in stage I., not exceeding 6.0 wt.% throughout the entire reaction time. A mixture of position 16 and position 17 is added in parallel. Subsequently, stirring is continued for 1h.

### Stage iii.

The components indicated under "Mono 2" in table A are premixed in a separate vessel. This mixture is added dropwise to the reactor over the course of 1 hour, with the fraction of the monomers in the reaction solution, based on the total amount of monomers used in stage II, not exceeding 6.0 wt% throughout the entire reaction time. A mixture of position 25 and position 26 is added in parallel. Subsequently, stirring is carried out for 2 hours.

Thereafter the reaction mixture is cooled to 60°C and diluted with items 27-29. The pH of the resulting dispersion is adjusted to 7.5-8.5 by careful addition of N,N-Dimethylethanolamine. The reaction is subsequently stirred for 30 minutes more, cooled to 25°C and filtered.

The number-average particle sizes are as follows:
After stage i: particle size 70 nm;
After stage ii: particle size 195 nm;
After stage iii: particle size 229 nm.

The glass transition temperature T_{g} was -4°C. The gel fraction resulted to 88 %.

### 1.4b Preparation of comparative aqueous dispersions (c-wD) comprising an acrylic-based multi-stage emulsion polymer

For the purpose of comparison, further aqueous dispersions comprising acrylic based multi-stage polymers were prepared (c-wD1, c-wD2 and c-wD3). The preparation generally followed the above protocol 1.4b for the dispersion (wD). Modifications become evident from Table 1.

**Table 1:**

| | | **(wD)** | **(c-wD1)** | **(c-wD2)** | **(c-wD3)** |
|---|---|---|---|---|---|
| | **Initial charge** | | | | |
| 1 | DI water | 7.2 | 7.2 | 7.2 | 14.02 |
| 2 | EF 800 | 0.07 | 0.07 | 0.07 | 0.14 |

| | **Mono1** | | | | |
|---|---|---|---|---|---|
| 3 | DI water | 2.61 | 2.61 | 2.61 | 5.08 |
| 4 | EF 800 | 0.07 | 0.07 | 0.07 | 0.14 |
| 5 | Styrene | 0.3 | 0.3 | 0.3 | 0.58 |
| 6 | n-Butyl acrylate | 0.33 | 0.33 | 0.33 | 0.64 |

| | **Initiator solution** | | | | |
|---|---|---|---|---|---|
| 7 | DI water | 0.28 | 0.28 | 0.28 | 0.55 |
| 8 | APS | 0.01 | 0.01 | 0.01 | 0.02 |
| | | | | | |
| 9 | DI water | 31.28 | 31.28 | 31.28 | 22.63 |

| | **Mono 1** | | | | |
|---|---|---|---|---|---|
| 10 | DI water | 9.7 | 9.7 | 9.7 | 9.45 |
| 11 | EF 800 | 0.2 | 0.2 | 0.2 | 0.05 |
| 12 | Styrene | 5.76 | 5.76 | 5.76 | 5.61 |
| 13 | n-Butyl acrylate | 13.96 | 13.96 | 13.96 | 13.6 |
| 14 | AMA | 0.09 | 0.09 | 0.09 | 0 |
| 15 | 1,6-HDDA | 0.26 | 0.26 | 0.26 | 0.34 |

| | **Initiator solution** | | | | |
|---|---|---|---|---|---|
| 16 | DI water | 3.42 | 3.42 | 3.42 | 3.01 |
| 17 | APS | 0.02 | 0.02 | 0.02 | 0.02 |

| | **Mono 2** | | | | |
|---|---|---|---|---|---|
| 18 | DI water | 3.42 | 3.42 | 3.42 | 3.33 |
| 19 | EF 800 | 0.07 | 0.07 | 0.07 | 0.07 |
| 20 | Methacrylic acid | 0 | 0 | 0 | 0.71 |
| 21 | 2-HEA | 0 | 0 | 0 | 0.95 |
| 22 | MEMO | 4.21 | 0 | 0 | 0 |
| 23 | n-Butyl acrylate | 1.34 | 4.25 | 1.34 | 3.74 |
| 24 | MMA | 0.6 | 1.9 | 0.6 | 0.58 |

| | **Initiator solution** | | | | |
|---|---|---|---|---|---|
| 25 | DI water | 2.46 | 2.46 | 2.46 | 3.01 |
| 26 | APS | 0.02 | 0.02 | 0.02 | 0.02 |

| | **Neutralization** | | | | |
|---|---|---|---|---|---|
| 27 | DI water | 7.43 | 12.32 | 11.64 | 6.55 |
| 28 | Butyl glycol | 4.89 | 0 | 4.89 | 4.7 |
| 29 | DMEA | 0,01 | 0,01 | 0,01 | 0.46 |

The above Table 1 shows that only within preparation of the acrylic-based multi-stage emulsion polymer of dispersion (wD) a silane-containing olefinically unsaturated monomer was part of the mixture (M) applied in the last step of emulsion polymerization. While in (c-wD1) the amount of the omitted silane-containing monomer was compensated by equally increasing the amounts of n-Butyl acrylate and MMA (to ensure the same size and overall share of the last polymer stage), in (c-wD2) this compensation was not realized. Lastly, (c-wD3) is another modification comprising also acid and hydroxy functional monomers in the last polymer stage. This polymer is known from e.g. WO 2017088988 A1.

### 1.5 Preparation of an aqueous dispersion of an anionically stabilized polyurethane-(meth)acrylate hybrid polymer [(b-2c)]

### 1.5.1 Polyurethane precursor

A stirred tank equipped with an anchor stirrer, thermometer and a reflux condenser is used to keep 53 parts of the polyester resin PE1, 0,05 part of dibutyltin dilaurate, 2.1 parts of neopentyl glycol, 0.7 part of trimethylolpropane monoallyl ether, 16.5 parts of dicyclohexylmethane 4,4'-diisocyanate (CAS-No.: 5124-30-1), and 22.5 parts of methyl ethyl ketone at 80°C until the NCO content of the solution has reached 1.0% - 1.2%. After the characteristic numbers have been reached, the resulting isocyanate prepolymer is reacted with diethanolamine, the amount of the diethanolamine being calculated equimolarly to the amount of the isocyanate. A solids content of 60% to 62% is subsequently established using methyl ethyl ketone.

### 1.5.2 Acrylate stage

A stirred tank equipped with two separate feed lines, anchor stirrer and thermometer is charged with 24 parts of the polyurethane precursor. An inert gas atmosphere is generated in the reactor using nitrogen. 2.7 parts of n-butyl acrylate, 2.6 parts of butyl methacrylate, 8 parts of methyl methacrylate and 1.13 parts of methacrylic acid are metered in over 3 hours. In parallel, a mixture of 3 parts of methyl ethyl ketone and 0.7 part of tert-butyl per-2-ethylhexanoate is metered into the vessel over 3 hours and 45 minutes likewise; the 2nd feed here starts 15 minutes before the 1st feed The temperature of the tank is maintained at 80°C. After a postpolymerization phase of 60 minutes, 0.9 part of N,N'-dimethylethanolamine and subsequently 50 parts of water are metered in over 1h. Then reduced pressure is applied and the methyl ethyl ketone is removed entirely by distillation. Water is then added to establish a solids content of 35%. This gives a white dispersion having an acid number of 28 to 30 mg KOH/g, based on the solids content, with a pH of 8.5 to 9.0.

### 2. Preparation of aqueous pigment paste A

### Black base paint

Incorporated by stirring with strong shearing into a mixture of 14.8 parts of resin dispersion (a-3) (cf. 1.3 above) , 53.6 parts of resin dispersion (a-2) (cf. 1.1 above) and 13.5 parts of water are 1 part of solvent-free wetting agent (BYK 345), 2.4 parts of butyl glycol, 1.5 parts of a 10% strength N,N'-dimethylethanolamine solution, 0.5 part of a commercial surface-active additive (BYK 199), 1.5 parts of talc, and 4.4 parts of pigment (a-1) (carbon black (Color Black FW171)). The mixture is dispersed on a bead mill, made up with a further 1.5 parts of water, 5 parts of resin dispersion (a-2) (cf. 1.1 above) and 0.3 part of commercial PU thickener (Acrysol RM8), and then filtered. The resulting black base paint 1 has a VOC value of 186 g/L.

### 3. Preparation of mixing clear resin components B according to the invention and comparative mixing clear components cB1, cB2 and cB3:.

### Component B:

22 parts of the aqueous dispersion (wD) (cf. 1.4a above) and 30 parts of resin dispersion (b-2a) (cf. 1.1 above) are admixed with stirring with 1.6 parts of 52% strength of TMDD solution in butyl glycol, 2.5 parts of butyl glycol, 2.5 parts of 1-n-pentanol, 1 part of Rheovis AS 130, 7.6 part of resin dispersion (b-1) (cf. 1.3 above) and 24.8 parts of resin dispersion (b-2c) (cf. 1.5 above), and 10 parts of a 12% aqueous dispersion of an amorphous silica (Syloid ED3) are added. The homogenous mixture is subsequently filtered.

### Component cB1:

21 parts of the aqueous dispersion (c-wD1) (cf. 1.4b above) and 30 parts of resin dispersion (b-2a) (cf. 1.1 above) are admixed with stirring with 1.6 parts of 52% strength of TMDD solution in butyl glycol, 2.5 parts of butyl glycol, 2.5 parts of 1-n-pentanol, 1 part of Rheovis AS 130, 7.6 part of resin dispersion (b-1) (cf. 1.3 above) and 24.8 parts of resin dispersion (b-2c) (cf. 1.5 above), and 10 parts of a 12% aqueous dispersion of an amorphous silica (Syloid ED3) are added. The homogenous mixture is subsequently filtered.

### Component cB2:

25 parts of the aqueous dispersion (c-wD-2) (cf. 1.4b above) and 30 parts of resin dispersion (b-2a) (cf. 1.1 above) are admixed with stirring with 1.6 parts of 52% strength of TMDD solution in butyl glycol, 2.5 parts of butyl glycol, 2.5 parts of 1-n-pentanol, 1 part of Rheovis AS 130, 7.6 part of resin dispersion (b-1) (cf. 1.3 above) and 24.8 parts of resin dispersion (b-2c) (cf. 1.5 above), and 10 parts of a 12% aqueous dispersion of an amorphous silica (Syloid ED3) are added. The homogenous mixture is subsequently filtered.

### Component cB3:

20 parts of the aqueous dispersion (c-wD3) (cf. 1.4b above) and 30 parts of resin dispersion (b-2a) (cf. 1.1 above) are admixed with stirring with 1.6 parts of 52% strength of TMDD solution in butyl glycol, 2.5 parts of butyl glycol, 2.5 parts of 1-n-pentanol, 1 part of Rheovis AS 130, 7.6 part of resin dispersion (b-1) (cf. 1.3 above) and 24.8 parts of resin dispersion (b-2c) (cf. 1.5 above), and 10 parts of a 12% aqueous dispersion of an amorphous silica (Syloid ED3) are added. The homogenous mixture is subsequently filtered.

### 4. Preparation of the component C:

1.5 wt% of a phyllosilicate (Laponite RD) are dispersed with 0.18 wt% of a biocide (Acticide MBR1) and 1 wt% of polypropylene glycol (Pluriol P900, available from BASF SE) in deionized water.

### 5. Preparation of inventive aqueous coating material E as well as comparative coating materials C1 to C4

The aqueous coating materials are formed by mixing of aqueous pigment paste A, pigment-free components B and cB1-cB3, and component C.

Table 2 gives an overview about prepared coating materials and the amounts (parts by weight) of applied components A to C in these coating materials.

**Table 2:**

| Component | Coating material E | Coating material C1 | Coating material C2 | Coating material C3 |
|---|---|---|---|---|
| Component A | 50 | 50 | 50 | 50 |
| Component B | 50 | - | - | - |
| Component cB1 | - | 50 | - | - |
| Component cB2 | - | - | 50 | - |
| Component cB3 | - | - | - | 50 |
| Component C | 50 | 50 | 50 | 50 |
| Sum | 150 | 150 | 150 | 150 |

As a further comparative coating material C4, coating material C3 was taken, but additionally admixed with 8 parts by weight of Takelac WS 4022 (Fa. MITSUI CHEMICALS, INC.), i.e. a silane functionalized polyurethane resin having hydrolysable silane functions.

### 6. Evaluation of properties of multicoat systems

Multicoat systems were prepared by application of the above coating materials E and C1 to C4 according to the above protocol (cf. 6. Production of multicoat systems). One week after preparation, the multicoat systems were analysed for different properties, namely cross-cut adhesion, steam jet adhesion and stone ship adhesion. In addition, a second sample of each multicoat system, directly after preparation, was transferred to a climate chamber (climate, 40°C, 100 % humidity, 240 h) and then analysed for the beforementioned properties.

The details of the analysis are as follows:

### Cross-cut adhesion:

Cross-cut adhesion was performed according to DIN EN ISO 2409:2013-06.

### Steam jet adhesion:

Steam jet adhesion was performed according to DIN 55662:2009-12.

### Stone chip adhesion:

Stone chip adhesion test and evaluation was performed according to DIN EN ISO 20567-1:2017-07 and DIN 55996-1:2001-04.

Table 3 and 4 show the respective results. Thereby, table 3 shows the results for multicoat systems prepared via the first silane-based clearcoat material and table 4 shows the results for the multicoat systems prepared via the second silane-based clearcoat material. For all shown results, lower values depict better performances in the respective tests.

**Table 3:**

| Analysis | Coating material E | Coating material C1 | Coating material C2 | Coating material C3 |
|---|---|---|---|---|
| Stone chip adhesion | 2 | 3 | 3 | 2 |
| Stone chip adhesion climate | 2 | 3 | 3 | 2 |
| Steam jet adhesion | 3a | 4a | 4a | 4a |
| Steam jet adhesion climate | 1a | 4a | 1a | 2b |
| Cross cut adhesion | 0 | 1 | 1 | 1 |
| Cross cut adhesion climate | 1 | 2 | 1 | 1 |

**Table 4:**

| Analysis | Coating material C3 | Coating material C4 |
|---|---|---|
| Stone chip adhesion | 2 | 2 |
| Stone chip adhesion climate | 2.5 | 2.5 |
| Steam jet adhesion | 2a | 2a |
| Steam jet adhesion climate | 3a | 2a |
| Cross cut adhesion | 0 | 0 |
| Cross cut adhesion climate | 1 | 1 |

The results proof that only the multicoat system according to the invention shows convincing properties regarding steam jet, stone chip and cross-cut adhesion. Also, remarkably, the system C4 including a silane functionalized polyurethane resin having hydrolysable silane functions does have properties only comparable to comparative system C3. Accordingly, simple and arbitrary addition of silane functionality does not achieve the effect of the invention.

## Claims

1. A mixer system for producing aqueous coating materials from at least one aqueous pigment paste A,
comprising at least one color pigment,
and at least one aqueous mixing clear resin component B,
whereby the at least one mixing clear resin component B comprises at least one aqueous dispersion (wD)
comprising an acrylic-based multi-stage emulsion polymer,
whereby the acrylic-based multi-stage emulsion polymer is produced by successive radical emulsion polymerization of at least two mixtures (M) of olefinically unsaturated monomers,
wherein the mixture (M) applied in the last step of emulsion polymerization comprises at least one silane-containing olefinically unsaturated monomer.

2. The mixer system as claimed in claim 1, wherein the pigment paste A comprises at least one anionically stabilized binder (a-2) and/or at least one nonionically stabilized binder (a-3).

3. The mixer system as claimed in claim 1 or 2, wherein the anionically stabilized binder (a-2) of the pigment paste A is an anionically stabilized polyurethane polymer in dispersion in water, where the anionically stabilized polyurethane polymer has an acid number of 20 to 40 mg KOH/g, based on the solids content, where the dispersion has a pH of 7.0 to 8.0, and where the dispersion comprises a polyol, more particularly polypropylene glycol, having an average molar mass Mₙ of 500 to 1500 Da.

4. The mixer system as claimed in any of the preceding claims, wherein the nonionically stabilized binder (a-3) of the pigment paste A is a nonionically stabilized acrylate copolymer in dispersion in water, the nonionically stabilized acrylate copolymer being obtainable by reaction of
(I) at least one anchor group monomer unit having at least one ionizable functional group, a functional group with active hydrogen, or a combination thereof, where
- the ionizable functionality is other than a carboxylic acid group in which the carbonyl carbon is separated from the closest ethylenically unsaturated carbon by at least four atoms,
- the anchor group of monomer units (a) contain no polyoxyalkylene groups, and
- one of the anchor group monomer units is copolymerized 1-(2-methacryloyloxyethyl)-2-imidazolidinone;
(II) 5 wt% to 45 wt%, based on the total weight of the monomers, of at least one monomer unit comprising a polyoxyalkylene group, a gamma-hydroxycarbamate group, a beta-hydroxycarbamate group, and a combination thereof; and
(III) 1 to 50 weight percent, based on the total weight of the monomers, of at least one aromatic monomer unit.

5. The mixer system as claimed in any of the preceding claims, wherein the at least one aqueous mixing clear resin component B further comprises at least one acrylate-based microgel dispersion (b-1), the acrylate-based microgel having a glass transition temperature T_{g} of 50 to 60°C (determined on the basis of DIN 51005 and as further outlined in the description).

6. The mixer system as claimed in any of the preceding claims, wherein the preparation of the acrylic-based multi-stage emulsion polymer comprised in the aqueous dispersion (wD) encompasses the successive radical emulsion polymerization of three mixtures (MA), (MB), and (MC) of olefinically unsaturated monomers.

7. The mixer system as claimed in any of the preceding claims, wherein the silane containing olefinically unsaturated monomer comprises, as olefinically unsaturated moiety, a (meth)acrylate function, an allyl group or a vinyl group.

8. The mixer system as claimed in any of the preceding claims, wherein the silane containing olefinically unsaturated monomer is described by the following general formula (I)
[X-SiR¹ₐ(OR²)₃₋ₐ] (I)
wherein
X represents a group having an olefinically unsaturated group and being bound to the silicon via a carbon atom,
R¹ represents, independently from each other, an alkyl, cycloalkyl, aryl, or aralkyl group, it being possible for the carbon chain to be interrupted by nonadjacent oxygen, sulfur, or NRₐ groups, where Rₐ is alkyl, cycloalkyl, aryl, or aralkyl;
R² represents hydrogen, an alkyl, or a cycloalkyl group, it being possible for the carbon chain to be interrupted by nonadjacent oxygen, sulfur or NRₐ groups, where Rₐ is alkyl, cycloalkyl, aryl, or aralkyl;
a is 0, 1 or 2, preferably 0 or 1, most preferred 0.

9. The mixer system as claimed in claim 8, wherein R¹ and R² are, independently from each other, a C₁-C₆ alkyl group, preferably a C₁ alkyl group (i.e. methyl).

10. The mixer system as claimed in any of claims 7 to 9, wherein the amount of silane containing olefinically unsaturated monomer applied in the last step of emulsion polymerization is from 30 to 80 wt%, based on the total amount of monomers of the mixture (M) applied in the last step of emulsion polymerization.

11. A method for producing an aqueous coating material by mixing at least two aqueous components, wherein a mixer system as claimed in any of claims 1 to 10 is used and wherein at least one pigment paste A and at least one mixing clear resin component B are applied and thus mixed.

12. Aqueous coating material based on the mixing system according to claims 1 to 10, whereby the aqueous coating material contains, in intermixed form, at least two aqueous components, whereby at least one component is a pigment paste A and at least one further component is a mixing clear resin component B of the mixing system.

13. A method of producing a coating layer on a substrate comprising the application of an aqueous coating material of claim 12 onto the substrate and subsequent drying of the applied coating material.

14. The method according to claim 13, wherein the drying step is conducted at a temperature of below 80°C, preferably of below 60°C, more preferably of below 40°C.

15. The method according to claim 13 or 14, wherein, after application of the coating material according to claim 12, a clearcoat material is applied onto the applied coating material according to claim 12 and wherein both the applied coating material according to claim 12 and the applied clearcoat material are cured together.

16. The method according to claim 15, wherein a silane-based clearcoat material (i.e. a clearcoat material which cures via hydrolyzation and condensation of hydrolysable silane functions, preferably alkoxysilane functions), is applied as clear coat material.

17. The method according to any of claims 13 to 16, wherein the substrate is a multilayer coating system having damaged sides, meaning that the method involves the repair of the multilayer coating system.

18. Multicoat system prepared according to any of claims 13 to 17.

## Patentansprüche

1. Mischsystem zur Herstellung von wässrigen Beschichtungsstoffen aus mindestens einer wässrigen Pigmentpaste A,
umfassend mindestens ein Farbpigment
und mindestens eine wässrige Mischklarharzkomponente B, wobei die mindestens eine Mischklarharzkomponente B mindestens eine wässrige Dispersion (wD) umfasst,
die ein mehrstufiges Emulsionspolymer auf Acrylbasis umfasst,
wobei das mehrstufige Emulsionspolymer auf Acrylbasis durch aufeinanderfolgende radikalische Emulsionspolymerisation von mindestens zwei Mischungen (M) olefinisch ungesättigter Monomere hergestellt wird, wobei die im letzten Schritt der Emulsionspolymerisation eingesetzte Mischung (M) mindestens ein silanhaltiges olefinisch ungesättigtes Monomer umfasst.

2. Mischsystem nach Anspruch 1, wobei die Pigmentpaste A mindestens ein anionisch stabilisiertes Bindemittel (a-2) und/oder mindestens ein nichtionisch stabilisiertes Bindemittel (a-3) umfasst.

3. Mischsystem nach Anspruch 1 oder 2, wobei das anionisch stabilisierte Bindemittel (a-2) der Pigmentpaste A ein anionisch stabilisiertes Polyurethanpolymer in Dispersion in Wasser ist, wobei das anionisch stabilisierte Polyurethanpolymer eine Säurezahl von 20 bis 40 mg KOH/g, bezogen auf den Feststoffgehalt, aufweist, wobei die Dispersion einen pH-Wert von 7,0 bis 8,0 aufweist und wobei die Dispersion ein Polyol, insbesondere Polypropylenglykol, mit einer mittleren Molmasse Mₙ von 500 bis 1500 Da umfasst.

4. Mischsystem nach einem der vorhergehenden Ansprüche, wobei das nichtionisch stabilisierte Bindemittel (a-3) der Pigmentpaste A ein nichtionisch stabilisiertes Acrylatcopolymerisat in Dispersion in Wasser ist, wobei das nichtionisch stabilisierte Acrylatcopolymerisat durch Umsetzung von Folgendem erhältlich ist:
(I) mindestens einer Ankergruppenmonomereinheit mit mindestens einer ionisierbaren funktionellen Gruppe, einer funktionellen Gruppe mit aktivem Wasserstoff oder einer Kombination davon, wobei
- die ionisierbare Funktionalität eine andere als eine Carbonsäuregruppe ist, bei der der Carbonylkohlenstoff durch mindestens vier Atome vom nächstgelegenen ethylenisch ungesättigten Kohlenstoff getrennt ist,
- die Ankergruppe der Monomereinheiten (a) keine Polyoxyalkylengruppen enthält und
- eine der Ankergruppenmonomereinheiten copolymerisiertes 1-(2-Methacryloyloxyethyl)-2-imidazolidinon ist,
(II) 5 Gew.-% bis 45 Gew.-%, bezogen auf das Gesamtgewicht der Monomere, mindestens einer Monomereinheit, die eine Polyoxyalkylengruppe, eine gamma-Hydroxycarbamatgruppe, eine beta-Hydroxycarbamatgruppe und eine Kombination davon umfasst, und
(III) 1 bis 50 Gew.-%, bezogen auf das Gesamtgewicht der Monomere, mindestens einer aromatischen Monomereinheit.

5. Mischsystem nach einem der vorhergehenden Ansprüche, wobei die mindestens eine wässrige Mischklarharzkomponente B weiterhin mindestens eine Mikrogeldispersion auf Acrylatbasis (b-1) umfasst, wobei das Mikrogel auf Acrylatbasis eine Glasübergangstemperatur T_{g} (bestimmt auf Basis von DIN 51005 und wie in der Beschreibung näher beschrieben) von 50 bis 60 °C aufweist.

6. Mischsystem nach einem der vorhergehenden Ansprüche, wobei die Herstellung des in der wässrigen Dispersion (wD) enthaltenen mehrstufigen Emulsionspolymerisats auf Acrylbasis die aufeinanderfolgende radikalische Emulsionspolymerisation von drei Mischungen (MA), (MB) und (MC) olefinisch ungesättigter Monomere umfasst.

7. Mischsystem nach einem der vorhergehenden Ansprüche, wobei das silanhaltige olefinisch ungesättigte Monomer als olefinisch ungesättigte Einheit eine (Meth)acrylatfunktion, eine Allylgruppe oder eine Vinylgruppe umfasst.

8. Mischsystem nach einem der vorhergehenden Ansprüche, wobei das silanhaltige olefinisch ungesättigte Monomer durch die folgende allgemeine Formel (I) beschrieben wird:
[X-SiR¹ₐ(OR²)₃₋ₐ] (I)
wobei
X für eine Gruppe mit einer olefinisch ungesättigten Gruppe steht und über ein Kohlenstoffatom an das Silicium gebunden ist,
R¹ unabhängig voneinander für eine Alkyl-, Cycloalkyl-, Aryl- oder Aralkylgruppe steht, wobei die Kohlenstoffkette durch nicht benachbarte Sauerstoff-, Schwefel- oder NRₐ-Gruppen unterbrochen sein kann, wobei Rₐ für Alkyl, Cycloalkyl, Aryl oder Aralkyl steht,
R² für Wasserstoff, eine Alkyl- oder eine Cycloalkylgruppe steht, wobei die Kohlenstoffkette durch nicht benachbarte Sauerstoff-, Schwefel- oder NRₐ-Gruppen unterbrochen sein kann, wobei Rₐ für Alkyl, Cycloalkyl, Aryl oder Aralkyl steht,
a für 0, 1 oder 2, bevorzugt 0 oder 1, am meisten bevorzugt 0 steht.

9. Mischsystem nach Anspruch 8, wobei R¹ und R² unabhängig voneinander für eine C₁-C₆-Alkylgruppe, vorzugsweise eine C₁-Alkylgruppe (d. h. Methyl), stehen.

10. Mischsystem nach einem der Ansprüche 7 bis 9, wobei die Menge des im letzten Schritt der Emulsionspolymerisation eingesetzten silanhaltigen olefinisch ungesättigten Monomeren 30 bis 80 Gew.-% beträgt, bezogen auf die Gesamtmenge der im letzten Schritt der Emulsionspolymerisation eingesetzten Monomere der Mischung (M).

11. Verfahren zur Herstellung eines wässrigen Beschichtungsstoffs durch Mischen von mindestens zwei wässrigen Komponenten, wobei ein Mischsystem nach einem der Ansprüche 1 bis 10 verwendet wird und dass mindestens eine Pigmentpaste A und mindestens eine Mischklarharzkomponente B eingesetzt und so gemischt werden.

12. Wässriger Beschichtungsstoff auf Basis des Mischsystems nach den Ansprüchen 1 bis 10, wobei der wässrige Beschichtungsstoff in gemischter Form mindestens zwei wässrige Komponenten enthält, wobei mindestens eine Komponente eine Pigmentpaste A und mindestens eine weitere Komponente eine Mischklarharzkomponente B des Mischsystems ist.

13. Verfahren zum Herstellen einer Beschichtungsschicht auf einem Substrat, umfassend das Aufbringen eines wässrigen Beschichtungsstoffs nach Anspruch 12 auf das Substrat und das anschließende Trocknen des aufgebrachten Beschichtungsstoffs.

14. Verfahren nach Anspruch 13, wobei der Trocknungsschritt bei einer Temperatur von unter 80 °C, bevorzugt von unter 60 °C, besonders bevorzugt von unter 40 °C durchgeführt wird.

15. Verfahren nach Anspruch 13 oder 14, wobei nach dem Aufbringen des Beschichtungsstoffs nach Anspruch 12 ein Klarlackstoff auf den aufgebrachten Beschichtungsstoff nach Anspruch 12 aufgebracht wird und wobei der aufgebrachte Beschichtungsstoff nach Anspruch 12 und der aufgebrachte Klarlackstoff gemeinsam gehärtet werden.

16. Verfahren nach Anspruch 15, wobei als Klarlackstoff ein Klarlackstoff auf Silanbasis (d. h. ein Klarlackstoff, der durch Hydrolyse und Kondensation hydrolysierbarer Silanfunktionen, vorzugsweise Alkoxysilanfunktionen, aushärtet) aufgebracht wird.

17. Verfahren nach einem der Ansprüche 13 bis 16, wobei das Substrat ein mehrschichtiges Beschichtungssystem mit beschädigten Seiten ist, was bedeutet, dass das Verfahren die Reparatur des mehrschichtigen Beschichtungssystems beinhaltet.

18. Mehrschicht-Beschichtungssystem, hergestellt nach einem der Ansprüche 13 bis 17.

## Revendications

1. Système de mélangeur pour la production de matériaux de revêtement aqueux à partir d'au moins une pâte pigmentaire aqueuse A,
comprenant au moins un pigment de couleur,
et au moins un composant B résine transparente de mélange aqueux,
moyennant quoi l'au moins un composant B résine transparente de mélange comprend au moins une dispersion aqueuse (wD)
comprenant un polymère en émulsion à plusieurs étages à base d'acrylique,
moyennant quoi le polymère en émulsion à plusieurs étages à base d'acrylique est produit par polymérisation radicalaire en émulsion successive d'au moins deux mélanges (M) de monomères oléfiniquement insaturés, dans lequel le mélange (M) appliqué dans la dernière étape de polymérisation en émulsion comprend au moins un monomère oléfiniquement insaturé contenant un silane.

2. Système de mélangeur selon la revendication 1, dans lequel la pâte pigmentaire A contient au moins un liant stabilisé anioniquement (a-2) et/ou au moins un liant stabilisé non ioniquement (a-3).

3. Système de mélangeur selon la revendication 1 ou 2, dans lequel le liant stabilisé anioniquement (a-2) de la pâte pigmentaire A est un polymère polyuréthanne stabilisé anioniquement en dispersion dans l'eau, le polymère polyuréthanne stabilisé anioniquement ayant un indice d'acide de 20 à 40 mg KOH/g sur la base de la teneur en solides, la dispersion ayant un pH de 7,0 à 8,0, et où la dispersion comprend un polyol, plus particulièrement un polypropylène glycol, ayant une masse molaire moyenne Mₙ de 500 à 1 500 Da.

4. Système de mélangeur selon l'une quelconque des revendications précédentes, dans lequel le liant stabilisé non ioniquement (a-3) de la pâte pigmentaire A est un copolymère acrylate stabilisé non ioniquement en dispersion dans l'eau, le copolymère acrylate stabilisé non ioniquement pouvant être obtenu par réaction de
(I) au moins une unité monomère de groupe d'ancrage ayant au moins un groupe fonctionnel ionisable, un groupe fonctionnel ayant un hydrogène actif, ou une combinaison de ceux-ci,
- la fonctionnalité ionisable est différente d'un groupe acide carboxylique dont le carbone carbonyle est séparé du carbone éthyléniquement insaturé le plus proche d'au moins quatre atomes,
- le groupe d'ancrage d'unités monomères (a) ne contiennent pas de groupes polyoxyalkylène, et
- une des unités monomères de groupe d'ancrage est la 1-(2-méthacryloyloxyéthyl)-2-imidazolidinone copolymérisée ;
(II) 5 % en poids à 45 % en poids, sur la base du poids total des monomères, d'au moins une unité monomère comprenant un groupe polyoxyalkylène, un groupe gamma-hydroxycarbamate, un groupe bêta-hydroxycarbamate, et une combinaison de ceux-ci ; et
(III) 1 à 50 pour cent en poids, sur la base du poids total des monomères, d'au moins une unité monomère aromatique.

5. Système de mélangeur selon l'une quelconque des revendications précédentes, dans lequel l'au moins un composant B résine transparente de mélange aqueuse comprend en outre au moins une dispersion de microgel à base d'acrylate (b-1), le microgel à base d'acrylate ayant une température de transition vitreuse T_{g} de 50 à 60 °C (déterminée sur la base de la norme DIN 51005 et comme indiqué en outre dans la description).

6. Système de mélangeur selon l'une quelconque des revendications précédentes, dans lequel la préparation du polymère en émulsion à plusieurs étages à base d'acrylique contenu dans la dispersion aqueuse (wD) englobe la polymérisation radicalaire successive en émulsion de trois mélanges (MA), (MB) et (MC) de monomères oléfiniquement insaturés.

7. Système de mélangeur selon l'une quelconque des revendications précédentes, dans lequel le silane contenant un monomère oléfiniquement insaturé comprend, en tant que groupement oléfiniquement insaturé, une fonction (méth)acrylate, un groupe allyle ou un groupe vinyle.

8. Système de mélangeur selon l'une quelconque des revendications précédentes, dans lequel le silane contenant un monomère oléfiniquement insaturé est décrit par la formule générale (I) suivante
[X-SiR¹ₐ(OR²)₃₋ₐ] (I)
dans laquelle
X représente un groupe ayant un groupe oléfiniquement insaturé et qui est lié au silicium par un atome de carbone,
R¹ représente, indépendamment l'un de l'autre, un groupe alkyle, cycloalkyle, aryle ou aralkyle, la chaine carbonée pouvant être interrompue par des groupes oxygène, soufre, NRₐ non adjacents, où Rₐ est alkyle, cycloalkyle, aryle ou aralkyle ;
R² représente hydrogène, un groupe alkyle ou cycloalkyle, la chaine carbonée pouvant être interrompue par des groupes oxygène, soufre, NRₐ non adjacents, où Rₐ est alkyle, cycloalkyle, aryle ou aralkyle ;
a est 0, 1 ou 2, de préférence 0 ou 1, le plus préférablement 0.

9. Système de mélangeur selon la revendication 8, dans lequel R¹ et R² sont, indépendamment l'un de l'autre, un groupe alkyle en C₁-C₆, de préférence un groupe alkyle en C₁ (c'est-à-dire méthyle).

10. Système de mélangeur selon l'une quelconque des revendications 7 à 9, dans lequel la quantité de silane contenant un monomère oléfiniquement insaturé appliquée dans la dernière étape de polymérisation en émulsion est de 30 à 80 % en poids, par rapport à la quantité totale de monomères du mélange (M) appliqué dans la dernière étape de polymérisation en émulsion.

11. Procédé de production d'un matériau de revêtement aqueux par mélange d'au moins deux composants aqueux, dans lequel l'on utilise un système de mélangeur selon l'une quelconque des revendications 1 à 10 et on applique et on mélange ainsi au moins une pâte pigmentaire A et au moins un composant B résine transparente de mélange.

12. Matériau de revêtement aqueux à base du système de mélange selon les revendications 1 à 10, dans lequel le matériau de revêtement aqueux contient, sous forme mélangée, au moins deux composants aqueux, au moins un composant étant une pâte pigmentaire A et au moins un autre composant étant un composant B résine transparente de mélange du système de mélange.

13. Procédé de production d'une couche de revêtement sur un substrat comprenant l'application d'un matériau de revêtement aqueux selon la revendication 12 sur le substrat et le séchage ultérieur du matériau de revêtement appliqué.

14. Procédé selon la revendication 13, dans lequel l'étape de séchage est effectuée à une température inférieure à 80 °C, de préférence inférieure à 60 °C, plus préférablement inférieure à 40 °C.

15. Procédé selon la revendication 13 ou 14, dans lequel, après application du matériau de revêtement selon la revendication 12, un matériau de revêtement transparent est appliqué sur le matériau de revêtement appliqué selon la revendication 12 et dans lequel à la fois le matériau de revêtement appliqué selon la revendication 12 et le matériau de revêtement transparent appliqué sont durcis ensemble.

16. Procédé selon la revendication 15, dans lequel un matériau de revêtement transparent à base de silane (c'est-à-dire un matériau de revêtement transparent durcissant par hydrolyse et condensation de fonctions silane hydrolysables, de préférence de fonctions alcoxysilane) est appliqué comme matériau de revêtement transparent.

17. Procédé selon l'une quelconque des revendications 13 à 16, dans lequel le substrat est un système de revêtement multicouche ayant des côtés endommagés, ce qui signifie que le procédé implique la réparation du système de revêtement multicouche.

18. Système multicouche préparé selon l'une quelconque des revendications 13 à 17.
